(19) **Europäisches Patentamt / European Patent Office / Office européen des brevets**

(11) **EP 3 318 061 B1**

(12) **FASCICULE DE BREVET EUROPEEN**

(45) Date de publication et mention de la délivrance du brevet:
**06.12.2023 Bulletin 2023/49**

(21) Numéro de dépôt: **16744447.0**

(22) Date de dépôt: **30.06.2016**

(51) Classification Internationale des Brevets (IPC):
**H04N 19/105** (2014.01)  **H04N 19/176** (2014.01)
**H04N 19/119** (2014.01)  **H04N 19/134** (2014.01)
**H04N 19/61** (2014.01)  **H04N 19/103** (2014.01)
**H04N 19/182** (2014.01)  **H04N 19/194** (2014.01)
**H04N 19/523** (2014.01)  **H04N 19/85** (2014.01)
**H04N 19/59** (2014.01)

(52) Classification Coopérative des Brevets (CPC):
**H04N 19/105; H04N 19/103; H04N 19/119;**
**H04N 19/176; H04N 19/182; H04N 19/194;**
**H04N 19/523; H04N 19/59; H04N 19/61;**
**H04N 19/85;** H04N 19/33; H04N 19/40

(86) Numéro de dépôt international:
**PCT/FR2016/051654**

(87) Numéro de publication internationale:
**WO 2017/001793 (05.01.2017 Gazette 2017/01)**

(54) **PROCEDE D'ENCODAGE D'IMAGE ET EQUIPEMENT POUR LA MISE EN OEUVRE DU PROCEDE**

VERFAHREN ZUR BILDCODIERUNG UND EINRICHTUNG ZUR DURCHFÜHRUNG DES VERFAHRENS

METHOD OF IMAGE ENCODING AND FACILITY FOR THE IMPLEMENTATION OF THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2015 FR 1556211**

(43) Date de publication de la demande:
**09.05.2018 Bulletin 2018/19**

(73) Titulaire: **ATEME**
**78140 Velizy Villacoublay (FR)**

(72) Inventeurs:
• **DUPUIS, Etienne**
**78230 Le Pecq (FR)**
• **MONNIER, Mathieu**
**75014 Paris (FR)**
• **THIESSE, Jean-Marc**
**92210 Saint Cloud (FR)**
• **LARBIER, Pierre**
**91570 Bièvres (FR)**

(74) Mandataire: **Plasseraud IP**
**66, rue de la Chaussée d'Antin**
**75440 Paris Cedex 09 (FR)**

(56) Documents cités:
**EP-A1- 2 685 739     US-A1- 2015 350 686**

• **DONGDONG ZHU ET AL: "Fast inter prediction mode decision for H.264", 2004 IEEE INTERNATIONAL CONFERENCE ON MULTIMEDIA AND EXPO : JUNE 27 - 30, 2004, TAIPEI, TAIWAN, IEEE OPERATIONS CENTER, PISCATAWAY, NJ, vol. 2, 27 juin 2004 (2004-06-27), pages 1123-1126, XP010771021, DOI: 10.1109/ICME.2004.1394414 ISBN: 978-0-7803-8603-7**
• **HE LI ET AL: "Fast mode decision for spatial scalable video coding", 2006 IEEE INTERNATIONAL SYMPOSIUM ON CIRCUITS AND SYSTEMS 21-24 MAY 2006 ISLAND OF KOS, GREECE, IEEE - PISCATAWAY, NJ, USA, 21 mai 2006 (2006-05-21), page 4pp, XP032458380, DOI: 10.1109/ISCAS.2006.1693257 ISBN: 978-0-7803-9389-9 cité dans la demande**

EP 3 318 061 B1

- SIU W C ET AL: "On the architecture of H.264 to H.264 homogeneous transcoding platform", NEURAL NETWORKS AND SIGNAL PROCESSING, 2008 INTERNATIONAL CONFERENCE ON, IEEE, PISCATAWAY, NJ, USA, 7 juin 2008 (2008-06-07), pages 654-659, XP031298782, ISBN: 978-1-4244-2310-1
- DE WOLF K ET AL: "Comparison of prediction schemes with motion information reuse for low complexity spatial scalability", VISUAL COMMUNICATIONS AND IMAGE PROCESSING; 12-7-2005 - 15-7-2005; BEIJING,, 12 juillet 2005 (2005-07-12), XP030081036,
- CHIH-HUNG KUO ET AL: "Fast inter-prediction mode decision and motion search for H.264", 2004 IEEE INTERNATIONAL CONFERENCE ON MULTIMEDIA AND EXPO : JUNE 27 - 30, 2004, TAIPEI, TAIWAN, IEEE OPERATIONS CENTER, PISCATAWAY, NJ, vol. 1, 27 juin 2004 (2004-06-27), pages 663-666, XP010770898, DOI: 10.1109/ICME.2004.1394279 ISBN: 978-0-7803-8603-7

**Description**

La présente invention se rapporte à un procédé d'encodage d'image et un dispositif pour la mise en oeuvre de ce procédé. Elle s'applique notamment au codage d'images d'un flux vidéo.

Les données vidéo font en général l'objet d'un codage source visant à les compresser afin de limiter les ressources nécessaires à leur transmission et/ou à leur stockage. Il existe de nombreux standards de codage, tels que H.264/AVC, H.265/HEVC et MPEG-2, qui peuvent être utilisés à cette fin.

On considère un flux vidéo comprenant un ensemble d'images. Dans les schémas de codage classique, les images du flux vidéo à encoder sont typiquement considérées selon une séquence d'encodage, et chacune est divisée en ensembles de pixels eux aussi traités séquentiellement, par exemple en commençant en haut à gauche et en finissant en bas à droite de chaque image.

L'encodage d'une image du flux est ainsi effectué en divisant une matrice de pixels correspondant à l'image en plusieurs ensembles, par exemple des blocs de taille fixe 16 x 16, 32 x 32 ou 64 x 64 pixels, et en encodant ces blocs de pixels selon une séquence de traitement donnée. Certains standards, comme le H.264/AVC, prévoient la possibilité de décomposer des blocs de taille 16 x 16 pixels (appelés alors macro-blocs) en sous-blocs, par exemple de taille 8 x 8 ou 4 x 4, afin d'effectuer les traitements d'encodage avec une granularité plus fine. Le standard H.265/HEVC prévoit l'utilisation de blocs de taille fixe allant jusqu'à 64 x 64 pixels, ces blocs pouvant être partitionnés jusqu'à une taille minimale de 8 x 8 pixels.

Les techniques existantes de compression vidéo peuvent être divisées en deux grandes catégories : d'une part la compression dite « Intra », dans laquelle les traitements de compression sont effectuées sur les pixels d'une unique image ou trame vidéo, et d'autre part la compression dite « Inter », dans laquelle les traitements de compression sont effectuées sur plusieurs images ou trames vidéo. Dans le mode Intra, le traitement d'un bloc (ou ensemble) de pixels comprend typiquement une prédiction des pixels du bloc effectuée à l'aide de pixels causaux (précédemment codés) présents dans l'image en cours d'encodage (dite « image courante »), auquel cas on parle de « prédiction Intra ». Dans le mode Inter, le traitement d'un bloc (ou ensemble) de pixels comprend typiquement une prédiction des pixels du bloc effectuée à l'aide de pixels issus d'images précédemment codées, auquel cas on parle de « prédiction Inter » ou de « compensation de mouvement » (en anglais « motion compensation »).

Ces deux types de codage sont utilisés au sein de schémas de codage dits « hybrides », qui sont spécifiés dans les codées vidéo existants (MPEG2, H.264/AVC, HEVC) et sont décrits pour le codée HEVC (High Efficiency Video Coding) dans l'article intitulé « Overview of the High Efficiency Video Coding (HEVC) Standard », par Gary J. Sullivan et al., IEEE Transactions on Circuits and Systems for Video Technology, vol. 22, No. 12, Dec. 2012.

Cette exploitation des redondances spatiales et/ou temporelles permet d'éviter de transmettre ou de stocker la valeur des pixels de chaque bloc (ou ensemble) de pixels, en représentant certains au moins des blocs par un résiduel de pixels représentant la différence (ou la distance) entre des valeurs de prédiction des pixels du bloc et les valeurs réelles des pixels du bloc prédit.

L'information des résiduels de pixels est présente dans les données générées par l'encodeur après transformée (par exemple, de type transformée en cosinus discrète, ou en anglais DCT, pour Discrete Cosine Transform) et quantification afin de réduire l'entropie des données générées par l'encodeur.

Il est souhaitable de réduire autant que possible les informations additionnelles générées par la prédiction des pixels et présentes en sortie de l'encodeur afin d'augmenter l'efficacité d'un schéma de codage/compression à un niveau de distorsion donné. A l'inverse, on peut aussi chercher à réduire ces informations additionnelles pour augmenter l'efficacité d'un schéma de codage/compression à un niveau de débit de sortie de l'encodeur donné.

Un encodeur vidéo effectue typiquement un choix de mode d'encodage correspondant à une sélection de paramètres d'encodage pour un ensemble de pixels traité. Cette prise de décision peut être implémentée en optimisant une métrique de débit et distorsion, les paramètres d'encodage sélectionnés par l'encodeur étant ceux qui minimisent un critère débit-distorsion. Le choix du mode d'encodage a alors un impact sur les performances de l'encodeur, à la fois en termes de gain de débit et de qualité visuelle.

Le standard de compression vidéo HEVC promulgué en 2013 procure une amélioration significative des performances par rapport aux standards précédents, en termes de réduction du débit de sortie à qualité visuelle constante, au prix d'un accroissement de la complexité de traitement. Cela se traduit notamment par un temps de compression pour des séquences vidéo au format 4K (aussi dénommé UHD-1) (3840 x 2160 pixels) pour l'heure incompatible avec un traitement temps-réel.

Différentes techniques d'accélération des algorithmes de décision ont été proposées, comme par exemple les techniques dites SAD ou SATD qui utilisent des métriques de décisions (distorsion ou débit) dites « objectives » qui sont moins complexes, telles que la somme des différences absolues (en anglais « Sum of Absolute Différences », ou SAD) ou l'erreur quadratique moyenne (en anglais « Mean Square Error », ou MSE), la technique dite « early exit » dans laquelle des conditions d'arrêt d'une décision sont mises en place en fonction de paramètres empiriques, ou la limitation du nombre de choix de codage mis en compétition, Cependant, un mauvais choix de mode de codage peut entraîner des artefacts qui se traduisent par une dégradation de la qualité visuelle perçue. Les méthodes de calcul basées sur l'optimisation débit-distorsion permettent certes de réduire le débit en sortie de l'encodeur, néanmoins parfois aux dépens du rendu visuel.

Les techniques d'accélération mentionnées ci-dessus dégradent donc la qualité de compression, ce qui, face à l'augmentation du nombre de pixels à traiter (ultra HD, haut frame rate, 3D, etc.) pose le problème de la nécessité d'accélérer la décision de mode de codage avec de meilleures performances en termes de qualité de compression.

Le document « Fast inter prédiction mode décision for H. 264 », de Dongdong Zhu et al., décrit un procédé d'encodage de type H. 264 utilisant un redimensionnement d'un flux vidéo à encoder H.264 avec une résolution inférieure de moitié. Les documents « Fast mode décision for spatial scalable vidéo coding », de He Li et al. et « Comparison of prédiction schemes with motion information reuse for low complexity spatial scalability », de De Wolf et al., décrivent un schéma d'encodage vidéo dit scalable.

Il existe ainsi un besoin pour un procédé d'encodage d'image amélioré en termes d'accélération des temps de traitement et de qualité de compression.

Un objet de la présente invention est de proposer un procédé d'encodage d'image amélioré en termes d'accélération des temps de traitement et de qualité de compression.

Un autre objet de la présente invention est de proposer un procédé d'encodage d'image amélioré en termes d'accélération du temps d'encodage selon le standard HEVC de séquences vidéo au format 4K ou à une résolution supérieure.

Un autre objet de la présente invention est de proposer un procédé d'encodage d'image amélioré permettant l'encodage en temps réel selon le standard HEVC de séquences vidéo au format 4K ou à une résolution supérieure.

Selon un premier aspect, il est proposé un procédé d'encodage d'un premier ensemble d'images d'une séquence vidéo selon un premier ensemble de paramètres d'encodage, dans lequel le premier ensemble de paramètres d'encodage définit un ensemble de paramètres utilisables pour encoder chaque image du premier ensemble d'images, le procédé comprenant : réduire la taille des images du premier ensemble d'images en fonction d'un facteur d'échelle pour générer un deuxième ensemble d'images correspondant à la séquence vidéo; générer, pour chaque image du deuxième ensemble d'images, des deuxièmes données d'encodage selon un deuxième ensemble de paramètres d'encodage, dans lequel le deuxième ensemble de paramètres d'encodage définit un ensemble de paramètres utilisables pour encoder chaque image du deuxième ensemble d'images, et dans lequel les deuxièmes données d'encodage identifient un choix de paramètres d'encodage parmi le deuxième ensemble de paramètres d'encodage ; déterminer, pour chaque image du premier ensemble d'images, des premières données d'encodage par transposition d'échelle respective, en fonction du facteur d'échelle, des deuxièmes données d'encodage générées pour l'image correspondante dans le deuxième ensemble d'images, dans lequel les premières données d'encodage identifient un choix de paramètres d'encodage parmi le premier ensemble de paramètres d'encodage et comprennent des premières données de codage prédictif des blocs d'encodage issus du partitionnement ; déterminer, pour au moins un bloc d'encodage d'une image du premier ensemble d'images, des résiduels de pixels respectifs représentatifs d'une distance entre les pixels du bloc d'encodage et les pixels d'un bloc de prédiction du bloc d'encodage déterminé à partir des données de codage prédictif obtenues pour le bloc d'encodage par transposition d'échelle des deuxièmes données d'encodage ; appliquer, pour le au moins un bloc d'encodage d'une image du premier ensemble d'images, une transformation par blocs aux résiduels de pixels déterminés pour le bloc d'encodage, et insérer les résiduels de pixels transformés et les premières données d'encodage dans un flux binaire d'encodage du premier ensemble d'images, dans lequel les deuxièmes données d'encodage comprennent en outre, pour une image courante du deuxième ensemble d'images, des données de transformation par blocs, le procédé comprenant en outre : pour chaque bloc d'encodage issu d'un partitionnement de l'image courante du deuxième ensemble d'images, sélectionner, dans un ensemble de paramètres de transformation par blocs, des paramètres de transformation par blocs pour l'application d'une transformée par blocs au résiduel déterminé pour le bloc d'encodage issu du partitionnement de l'image courante du deuxième ensemble d'images, et générer des deuxièmes données de transformation par blocs en fonction du paramètre de transformation sélectionné ; déterminer, pour chaque bloc d'encodage de chaque image du premier ensemble d'images, des premières données de transformation par blocs par une transposition d'échelle, en fonction du facteur d'échelle, des deuxièmes données de transformation par blocs ; et appliquer aux résiduels de pixels déterminés pour le bloc d'encodage de l'image du premier ensemble d'images la transformation par blocs en fonction des premières données de transformation par blocs.

Pour l'encodage d'une séquence vidéo (dite « originale »), le procédé proposé exploite avantageusement certains paramètres d'encodage déterminés lors de l'encodage d'une version redimensionnée de la séquence vidéo originale, en transposant ces paramètres d'encodage pour générer directement, c'est-à-dire sans exécuter à nouveau un algorithme de détermination de ces paramètres sur la séquence vidéo originale, des paramètres d'encodage correspondant pour la séquence vidéo originale.

Avantageusement, le deuxième ensemble de paramètres d'encodage pourra contenir au moins un deuxième paramètre ne se trouvant pas dans le premier ensemble de paramètres d'encodage, et le premier ensemble de paramètres comprendre au moins un premier paramètre correspondant à une transposition d'échelle en fonction du facteur d'échelle appliquée au deuxième paramètre.

L'utilisation d'ensembles de paramètres différents pour l'encodage d'une séquence vidéo originale et de sa version redimensionnée selon un facteur d'échelle permet de prévoir l'encodage de la version redimensionnée en utilisant des paramètres d'encodage qui ne sont pas disponibles pour l'encodage de la version originale, et qui correspondent après transposition d'échelle à un des paramètres disponibles pour l'encodage de la version originale, afin d'exploiter un plus grand nombre de ces paramètres disponibles.

Cela peut par exemple être le cas des paramètres de partitionnement des images d'un flux vidéo à encoder en blocs d'encodage. Dans une mise en oeuvre particulière du procédé proposé, les deuxièmes données d'encodage comprennent, pour une image courante du deuxième ensemble d'images, des deuxièmes données de partitionnement, et le procédé proposé comprend en outre : déterminer, selon un ensemble de paramètres de partitionnement inclus dans le deuxième ensemble de paramètres d'encodage, un partitionnement de l'image courante en blocs d'encodage, et générer les deuxièmes données de partitionnement en fonction du partitionnement déterminé ; déterminer les premières données de partitionnement par transposition d'échelle des deuxièmes données de partitionnement.

Cela peut aussi être le cas de paramètres de codage prédictif des blocs d'encodage. Dans une mise en oeuvre particulière du procédé proposé, les deuxièmes données d'encodage comprennent en outre, pour l'image courante, des deuxièmes données de codage prédictif, et le procédé proposé comprend en outre : pour chaque bloc d'encodage issu d'un partitionnement de l'image courante, déterminer, selon un ensemble de paramètres de codage prédictif, un mode de codage prédictif, et générer les deuxièmes données de codage prédictif en fonction du mode de codage déterminé ; déterminer les premières données de codage prédictif par transposition d'échelle des deuxièmes données de codage prédictif.

Cela peut aussi être le cas de paramètres de transformation par blocs qui peut être appliquée sur des résiduels de pixels déterminés par codage prédictif.

Dans une mise en oeuvre particulière du procédé proposé, le deuxième ensemble de paramètres d'encodage comprend un ensemble de paramètres de partitionnement, un ensemble de paramètres de codage prédictif, un ensemble de paramètres de codage de type à prédiction par corrélation temporelle bidirectionnelle, et un ensemble de paramètres de transformation par blocs, et le deuxième ensemble de paramètres d'encodage comprend au moins un deuxième paramètre parmi les paramètres de partitionnement, les paramètres de codage prédictif, les paramètres de codage de type à prédiction par corrélation temporelle bidirectionnelle, et les paramètres de transformation par blocs, ne se trouvant pas dans le premier ensemble de paramètres d'encodage, le premier ensemble de paramètres comprenant au moins un premier paramètre correspondant à une transposition d'échelle en fonction du facteur d'échelle appliquée au deuxième paramètre.

Dans une mise en oeuvre particulière du procédé proposé, le deuxième paramètre est un paramètre de partitionnement relatif à la taille minimum des blocs d'encodages utilisable pour définir un partitionnement.

Dans une mise en oeuvre particulière du procédé proposé, le deuxième paramètre est un paramètre de codage prédictif selon un mode de codage de type à prédiction par compensation de mouvement en utilisant un vecteur de mouvement pointant sur une image distincte d'une image courante dans le deuxième ensemble d'images avec une précision au huitième de pixel.

Dans une mise en oeuvre particulière du procédé proposé, le deuxième paramètre est un paramètre de transformation par blocs relatif à la taille minimum des blocs utilisable pour effectuer la transformation par blocs d'un bloc d'encodage.

Dans une mise en oeuvre particulière du procédé proposé, le deuxième paramètre est un paramètre de taille de bloc pour le codage prédictif selon un mode de codage de type à prédiction par compensation de mouvement de type bidirectionnelle en utilisant des premier et deuxième vecteurs de mouvement pointant respectivement sur des première et deuxième images distinctes d'une image courante dans le deuxième ensemble d'images.

Dans une mise en oeuvre particulière du procédé proposé, le premier ensemble de paramètres d'encodage pourra être choisi correspondant à un encodage du premier ensemble d'images selon le standard High Efficiency Video Coding, HEVC.

Selon un deuxième aspect, il est proposé un dispositif d'encodage d'un premier ensemble d'images d'une séquence vidéo selon un premier ensemble de paramètres d'encodage, comprenant une interface d'entrée configurée pour recevoir le premier ensemble d'images de la séquence vidéo, une unité d'encodage de flux vidéo, couplée de manière opérationnelle à l'interface d'entrée, et configurée pour encoder le premier ensemble d'images selon le premier ensemble de paramètres d'encodage en utilisant le procédé proposé.

Selon un autre aspect, il est proposé un programme d'ordinateur, chargeable dans une mémoire associée à un processeur, et comprenant des portions de code pour la mise en oeuvre des étapes du procédé proposé lors de l'exécution dudit programme par le processeur, ainsi qu'un ensemble de données représentant, par exemple par voie de compression ou d'encodage, ledit programme d'ordinateur.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à encoder un premier ensemble d'images d'une séquence vidéo selon un premier ensemble de paramètres d'encodage selon le procédé proposé.

Le procédé proposé convient particulièrement bien, bien que de façon non exclusive, pour l'encodage ou la compression d'une image d'une séquence d'images selon un schéma du type HEVC (High Efficiency Video Coding) ou SHVC (Scalable HEVC). Mais il convient aussi pour l'encodage d'images selon tout schéma d'encodage vidéo opérant sur des images découpées en blocs dans lequel les blocs sont encodés selon une pluralité de modes de codage comprenant au moins un mode de codage de type à prédiction par corrélation temporelle utilisant une pluralité d'images du flux vidéo à encoder.

Le procédé proposé pourra avantageusement être mis en oeuvre dans les cas où le mode de codage de type à prédiction par corrélation temporelle utilisant une pluralité d'images de l'ensemble d'images est de type utilisant une prédiction de mouvement à partir d'images précédemment codées (type de mode de codage référencé dans certains codeurs vidéo sous l'appellation « Inter ») ou de type utilisant un vecteur prédicteur prédéterminé sélectionné à partir de blocs voisins du bloc courant précédemment codés (types de mode de codage référencés dans certains codeurs vidéo sous les appellations « Skip » et « Merge »).

D'autres particularités et avantages de la présente invention apparaîtront dans la description ci-après d'exemples de réalisation non limitatifs, en référence aux dessins annexés, dans lesquels :

- La figure 1 est un schéma illustrant l'architecture d'un codeur pour la mise en oeuvre du procédé proposé ;
- Les figures 2a, 2b, et 2c sont des schémas illustrant des modes de prédiction Intra ;
- La figure 3 est un schéma illustrant une détermination de vecteur médian pour le codage en mode de prédiction Inter ;
- Les figures 4a et 4b sont des schémas illustrant une structure de partitionnement de bloc et une arborescence correspondante ;
- La figure 5 est un schéma illustrant un mode particulier de mise en oeuvre du procédé proposé ;
- Les figures 6, 7a et 7b sont des diagrammes illustrant le procédé proposé selon différents modes particuliers de mise en oeuvre ;
- La figure 8 est un schéma illustrant un ensemble de positions fractionnaires de pixels.

L'invention est définie par les revendications.
Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

Dans ce qui suit, on utilise indifféremment les termes « pixel » et « échantillon » pour désigner un élément d'une image numérique.

Le procédé proposé peut être mis en oeuvre par tout type d'encodeur d'image d'un ensemble d'images, comme par exemple un codec vidéo conforme aux standards H.264/AVC, H.265/HEVC, et/ou MPEG-2.

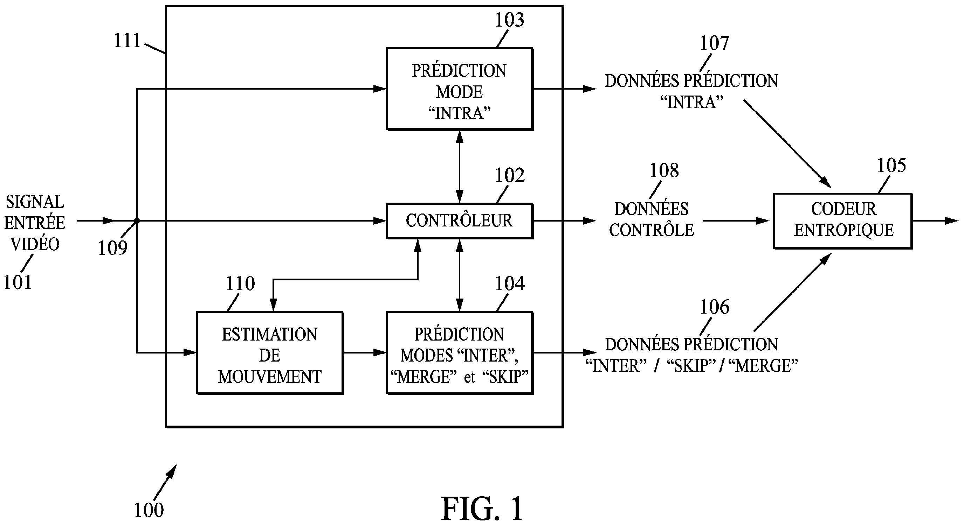

Dans le schéma de compression illustré par la Figure 1, les images sont considérées séquentiellement et divisées en ensembles de pixels traités séquentiellement en commençant en haut à gauche et en finissant en bas à droite. Ces ensembles de pixels sont dénommés « unités de codage » dans le standard HEVC, et sont de taille maximale 64 x 64 pixels, les unités de codage de cette taille étant appelés « Large Coding Units », ou « LCU ». Ces ensembles de pixels sont prédits à l'aide de pixels causaux (précédemment codés) présents dans l'image courante (prédiction « Intra »), ou bien à l'aide de pixels issus d'une ou plusieurs images précédemment codées (prédiction « Inter »). Cette exploitation des redondances spatiales et temporelles permet de représenter les unités de codage par un résiduel de pixels le plus faible possible qui est alors transmis au décodeur, éventuellement après transformée et quantification.

En référence à la figure 1, l'encodeur 100 reçoit en entrée 109 un flux vidéo d'entrée 101 comprenant une pluralité d'images à traiter pour effectuer l'encodage du flux. L'encodeur 100 comprend un contrôleur 102, couplé de manière opérationnelle à l'interface d'entrée 109, qui pilote une unité d'estimation de mouvement 110 et une unité de prédiction 104 pour les prédictions de types Inter, Merge et/ou Skip (décrites ci-dessous), ainsi qu'une unité de prédiction de mode Intra 103. Les données reçues sur l'interface d'entrée 109 sont transmises en entrée des unités de prédiction de mode Intra 103, d'estimation de mouvement 110, de prédiction Inter/Merge/Skip 104 et du contrôleur 102. L'ensemble contrôleur 102, unité d'estimation de mouvement 110, unité de prédiction 104 pour les prédictions Inter, Merge et Skip, et unité de prédiction de mode Intra 103 forme une unité d'encodage 111 couplée de manière opérationnelle à l'interface d'entrée 109.

L'unité de prédiction de mode Intra 103 génère des données de prédiction Intra 107 qui sont fournies en entrée d'un codeur entropique 105. L'unité d'estimation de mouvement 110 génère quant à elle des données d'estimation de mouvement qui sont fournies au contrôleur 102 ainsi qu'à l'unité de prédiction des modes Inter/Merge/Skip 104 pour les besoins de la prédiction en modes Inter, Merge et/ou Skip. L'unité de prédiction de modes Inter/Merge/Skip 104 génère des données de prédiction Inter, Merge ou Skip qui sont fournies en entrée du codeur entropique 105. Par exemple, les données fournies au décodeur pour une prédiction de type Inter peuvent comprendre un résiduel de pixels et des informations concernant un ou plusieurs vecteurs de mouvement. Ces informations relatives à un ou plusieurs vecteurs de mouvement peuvent comprendre un ou plusieurs indices identifiant un vecteur prédicteur dans une liste de vecteurs prédicteurs connue du décodeur. Les données fournies au décodeur pour une prédiction de type Skip ne comporteront typiquement pas de résiduel de pixels, et pourront aussi comprendre des informations identifiant un vecteur prédicteur dans une liste de prédicteurs connue du décodeur. La liste de vecteurs prédicteurs utilisée pour le codage de type Inter ne sera pas nécessairement identique à la liste de vecteurs prédicteurs utilisée pour le codage de type Skip. Le contrôleur 102 génère des données de contrôle 108 qui sont aussi fournies en entrée du codeur entropique 105.

Le contrôleur 102 est configuré pour piloter l'unité de prédiction de mode Intra 103 et l'unité de prédiction de modes Inter/Merge/Skip 104 afin de contrôler les données de prédiction qui sont respectivement fournies en entrée du codeur entropique 105 par l'unité de prédiction de mode Intra 103 et l'unité de prédiction de modes Inter/Merge/Skip 104. En fonction du schéma d'encodage mis en oeuvre par l'encodeur 100, le contrôleur 102 peut en outre être configuré pour sélectionner parmi les différents types de mode de prédiction (mode Intra, mode Inter, mode Merge ou mode Skip en fonction des modes de codage implémentés dans l'unité d'encodage 111) celui pour lequel des données de prédiction seront transmises au codeur entropique 105. Ainsi, le schéma d'encodage peut comprendre une décision pour chaque ensemble d'images traité visant à choisir le type de prédiction pour lequel des données seront transmises au codeur entropique 105. Ce choix sera typiquement mis en oeuvre par le contrôleur, pour décider de l'application du mode de prédiction Inter, du mode de prédiction Intra, du mode de prédiction Merge ou du mode de prédiction Skip au bloc (ou à l'unité de codage) en cours de traitement. Cela permet de commander l'envoi au codeur entropique de données de prédiction Intra 107 ou bien de données de prédiction Inter, Merge ou Skip 106 en fonction de la décision prise par le contrôleur 102.

L'encodeur 100 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire, l'unité de stockage de données ou le support de stockage amovible contient des instructions qui, lorsqu'elles sont exécutées par le contrôleur 102, amènent ce contrôleur 102 à effectuer ou contrôler les parties interface d'entrée 109, prédiction en mode Intra 103, prédiction en mode Inter/Merge/Skip 104, estimation de mouvement 110 et/ou traitement de données des exemples de mise en oeuvre du procédé proposé décrits dans les présentes. Le contrôleur 102 peut être un composant implémentant un processeur ou une unité de calcul pour l'encodage d'images selon le procédé proposé et le contrôle des unités 109, 110, 103, 104, 105 de l'encodeur 100.

En outre, l'encodeur 100 peut être mis en oeuvre sous forme logicielle, comme décrit ci-dessus, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). Les *SOC* (*System On Chip*) ou système sur puce sont des systèmes embarqués qui intègrent tous les composants d'un système électronique dans une puce unique. Un *ASIC* (*Application Spécifie Integrated Circuit*) est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type *FPGA* (*Field-Programmable Gate Array*) sont des circuits électroniques reconfigurables par l'utilisateur.

Un encodeur peut également utiliser des architectures hybrides, comme par exemple des architectures basées sur un CPU+FPGA, un GPU (*Graphies Processing Unit*) ou un MPPA (*Multi-Purpose Processor Array*).

L'image en cours de traitement est divisée en blocs d'encodage ou unités de codage (en anglais « Coding Unit », ou CU), dont la forme et la taille sont déterminées en fonction notamment de la taille de la matrice de pixels représentant l'image, par exemple en macroblocs de forme carrée de 16 x 16 pixels. On forme ainsi un ensemble de blocs pour lequel on définit une séquence de traitement (aussi appelé « parcours de traitement »). Dans le cas de blocs de forme carrée, on peut par exemple traiter les blocs de l'image courante en commençant par celui situé en haut à gauche de l'image, suivi de celui immédiatement à droite du précédent, jusqu'à arriver à la fin de la première ligne de blocs pour passer au bloc le plus à gauche dans la ligne de blocs immédiatement en-dessous de cette première ligne, pour terminer le traitement par le bloc le plus en bas et à droite de l'image.

On considère ainsi un « bloc courant » (parfois dénommé « bloc d'origine »), c'est-à-dire un bloc d'encodage en cours de traitement dans l'image courante. Le traitement du bloc courant peut comprendre le partitionnement du bloc en sous-blocs, afin de traiter le bloc avec une granularité spatiale plus fine que celle obtenue avec le bloc. Le traitement d'un bloc comprend par ailleurs la prédiction des pixels du bloc, en exploitant la corrélation spatiale (dans la même image) ou temporelle (dans une ou plusieurs autres images précédemment codées) entre les pixels. Lorsque plusieurs types de prédiction, comme par exemple une prédiction de type Intra, une prédiction de type Inter, une prédiction de type Merge et/ou une prédiction de type skip sont implémentés dans l'encodeur, la prédiction des pixels du bloc comprend typiquement la sélection d'un type de prédiction du bloc et d'informations de prédiction correspondants au type sélectionné, l'ensemble formant un jeu de paramètres d'encodage.

La prédiction du bloc de pixels traité permet de calculer un résiduel de pixels, qui correspond à l'écart entre les pixels du bloc courant et les pixels du bloc de prédiction, et est transmis dans certains cas au décodeur après transformée et quantification.

Pour coder un bloc courant, plusieurs modes de codage sont ainsi possibles et il est nécessaire d'inclure dans les données générées par l'encodage des informations de codage 106-108 signalant le choix de mode de codage qui a été effectué lors de l'encodage et selon lequel les données ont été encodées. Ces informations de codage 106-108 peuvent comprendre notamment le mode de codage (par exemple le type particulier de codage prédictif parmi les codages « Intra » et « Inter », ou parmi les codages « Intra », « Inter », « Merge » et « Skip » décrits ci-après), le partitionnement (dans le cas d'un ou plusieurs blocs partitionnés en sous-blocs), ainsi qu'une information de mouvement 106 dans le cas d'un codage prédictif de type « Inter », « Merge » ou « Skip » et un mode de prédiction Intra 107 dans le cas d'un codage prédictif de type « Intra ». Pour les modes de codage « Inter », « Skip » et « Merge », ces deux dernières informations peuvent elles aussi être prédites afin de réduire leur coût de codage, par exemple en exploitant les informations des blocs voisins du bloc courant.

Le standard HEVC utilise une structure de codage en quadtree, décrite ci-après, combinée à une sélection dynamique de taille principale de bloc. HEVC autorise un partitionnement de chaque image courante en blocs de taille allant de 64 x 64 pixels à 8 x 8 pixels. Le flux vidéo à encoder peut ainsi être parcouru avec des blocs de 64 x 64, chaque bloc de taille 64 x 64 pouvant être découpé en blocs de taille plus petite (le découpage le plus fin autorisé étant celui en 8 x 8 blocs, chacun de taille 8 x 8 pixels). L'encodeur choisit typiquement la taille des blocs utilisés selon des critères propriétaires qui ne sont pas définis par le standard.

Le standard HEVC utilise par ailleurs une représentation de type YCbCr de l'espace colorimétrique des signaux vidéo avec un échantillonnage qui peut être de type 4:2:2 ou 4:2:0 (sous-échantillonnage des couleurs). Le signal vidéo à encoder porte une information de luminance (signal Y) et deux informations de chrominance (signaux Cb et Cr). Les échantillons de chaque composante (Y, Cb, Cr) peuvent être codés sur 8 bits, 10 bits ou plus.

En échantillonnage de type 4:2:2, une zone de taille L x L pixels (ou échantillons) de luminance est de taille L/2 x L pour chaque composante de chrominance, ce qui revient à effectuer un sous-échantillonnage des couleurs dans la direction horizontale seulement. La représentation de type 4:2:2 correspond au format de signal dit SDI (en anglais, System Deployment Image).

En échantillonnage de type 4:2:0, une zone de taille L x L pixels (ou échantillons) de luminance est de taille L/2 x L/2 pour chaque composante de chrominance, ce qui revient à effectuer un sous-échantillonnage des couleurs dans la direction horizontale et dans la direction verticale.

Chaque image d'un flux vidéo à encoder de taille W x H pixels (par exemple, en format HD de taille 1920 x 1080 pixels et en format 4K de taille 3840 x 2160 pixels) peut être partitionnée en unités d'arbre de codage (en anglais « coding tree unit », ou « CTU »), chaque CTU comprenant des blocs d'arbre de codage (en anglais « coding tree block », ou « CTB ») de luminance et un nombre correspondant de CTBs de chrominance ainsi que des informations de syntaxe. Un CTB de luminance correspond à une zone rectangulaire de L x L échantillons de luminance de l'image, tandis qu'un CTB de chrominance correspondant lorsqu'on utilise un sous-échantillonnage de la chrominance de type 4:2:0 couvre un ensemble de L/2 x L/2 échantillons de chrominance, pour chaque composante de chrominance. Au contraire des macro-blocs de taille fixe (16 x 16 échantillons de luminance) spécifiés par les standards de codage vidéo précédents de l'ITU-T et de l'ISO, la taille L x L d'un CTB de luminance peut varier, parmi les valeurs 16 x 16, 32 x 32, ou 64 x 64 échantillons de luminance.

Les CTBs de luminance et de chrominance peuvent en outre être eux-mêmes partitionnés en une pluralité de blocs de codage (en anglais, « coding block », ou « CB »), en utilisant une représentation du partitionnement en arborescence. Le CTB de départ représentant la racine de l'arborescence, chaque noeud de l'arbre peut être divisé en blocs de taille moindre selon un processus itératif qui se termine lorsque la taille minimum pour la composante (luminance ou chrominance) est atteinte ou à un niveau supérieur de l'arborescence. L'extrémité de chaque branche de l'arborescence, correspondant à une feuille, est appelée « unité de prédiction » (en anglais, « prédiction unit », ou « PU »). Chaque noeud de l'arbre, autre que les feuilles, est appelé « unité de codage » (en anglais « coding unit », ou « CU »). Le partitionnement itératif du CTB de départ, qui peut correspondre à une LCU (« Large Coding Unit ») de taille 64 x 64, conduit à un ensemble d'unités de prédiction, dont les tailles respectives varient en fonction du niveau correspondant dans l'arborescence.

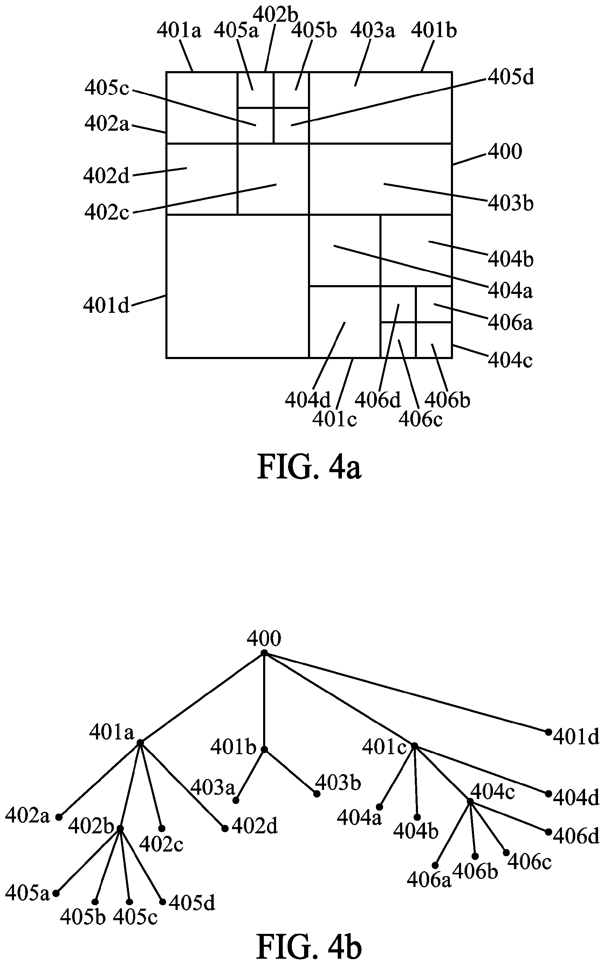

La figure 4a illustre un exemple de partitionnement de CTU (400) de taille 64 x 64, et la figure 4b un exemple d'arborescence représentant ce partitionnement. Sur la figure 4a, le CTU 400 est divisé en quatre blocs de taille 32 x 32 401a, 401b, 401c et 401d. Le bloc supérieur gauche 401a est lui-même partagé en quatre blocs de taille 16 x 16 402a, 402b, 402c et 402d. Le bloc supérieur droit 401b est partagé en deux blocs de taille 32 x 16 403a et 403 b. Le bloc inférieur droit 401c est partagé en quatre blocs de taille 16 x 16 404a, 404b, 404c et 404d. Le bloc inférieur gauche 401d n'est pas partagé. Le bloc supérieur droit de taille 16 x 16 402b du bloc supérieur gauche de taille 32 x 32 401a est divisé en quatre blocs de taille 8 x 8 405a, 405b, 405c, 405d. Le bloc inférieur droit de taille 16 x 16 404c du bloc inférieur droit de taille 32 x 32 401c est divisé en quatre blocs de taille 8 x 8 406a, 406b, 406c, 406d.

Les informations de syntaxe décrivant cet exemple de partitionnement peuvent par exemple préciser pour chaque noeud de l'arbre si le bloc correspondant est ou non partagé, et dans l'affirmative indiquer le nombre de noeuds de niveau inférieur. Lorsqu'un seul type de partage (par exemple en quatre blocs de taille deux fois moindre) est utilisé, l'information de partage pour chaque noeud peut uniquement indiquer si le bloc correspondant est ou non partagé.

Chaque unité de prédiction déterminée par le partitionnement des CTBs peut alors être codée, en utilisant une prédiction de type Inter, de type Intra, de type Skip ou de type Merge.

On décrit ci-après des exemples de modes de prédiction « Intra », « Inter », « Merge », et « skip », afin de faciliter la compréhension de la mise en oeuvre du procédé proposé pour un codage vidéo utilisant ces modes de prédiction.

Comme indiqué ci-dessus, le codage prédictif en mode « Intra » inclut une prédiction des pixels d'un bloc (ou ensemble) de pixels en cours de traitement à l'aide des pixels précédemment codés de l'image courante. Il existe différents modes de codage prédictif de type « Intra », dont certains sont décrits ci-après :
Dans le mode de prédiction « Intra » dit « DC » (pour « Discrete Continuous »), on utilise les valeurs des pixels voisins du bloc courant appartenant à des blocs qui ont été précédemment codés, et on calcule une moyenne des valeurs de ces pixels voisins. Le bloc prédictif est construit en utilisant pour chaque pixel la valeur moyenne obtenue.

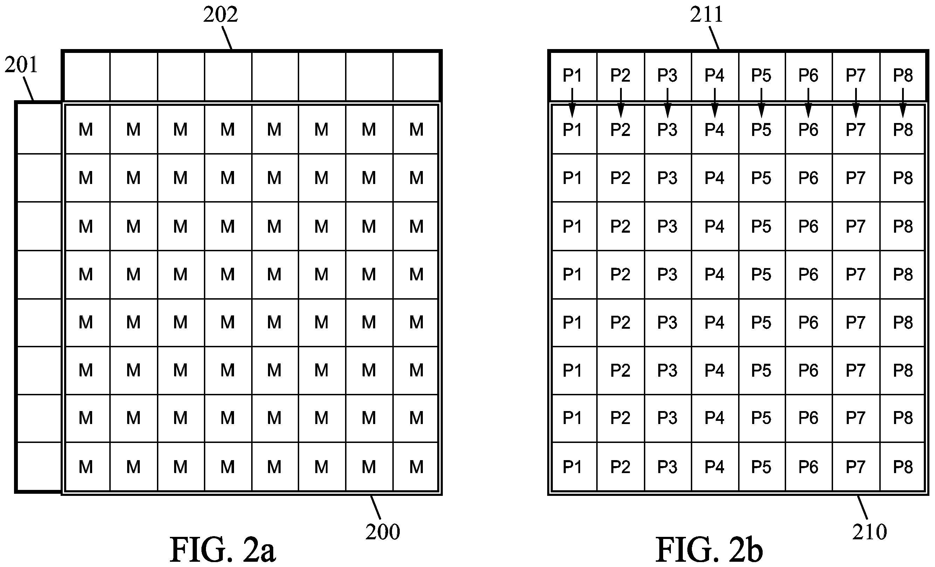

Par exemple, si l'on considère un bloc 200 de 8x8 pixels tel que celui illustré sur la figure 2a, on utilise les deux ensembles de 8 pixels voisins 201, 202 du bloc voisin disposé à gauche du bloc courant et du bloc voisin disposé au-dessus du bloc courant. On calcule une valeur moyenne M des valeurs de ces 16 pixels, que l'on utilise pour remplir les valeurs des pixels du bloc prédictif 200.

Dans le mode de prédiction « Intra » dit « V » (pour « Vertical »), on utilise les valeurs des pixels voisins du bloc courant appartenant à au bloc voisin disposé au-dessus du bloc courant, lorsque ces pixels voisins ont été précédemment codés, et on recopie la valeur de chaque pixel voisin pour les pixels de la colonne correspondante dans le bloc prédictif.

Par exemple, si l'on considère un bloc 210 de 8x8 pixels tel que celui illustré sur la figure 2b, on utilise par exemple l'ensemble de 8 pixels voisins 211 du bloc voisin disposé à gauche du bloc courant, dans le cas où le parcours de codage des blocs est tel que ce bloc a déjà été codé. On recopie la valeur de chacun des 8 pixels voisins dans la colonne correspondante du bloc prédictif 210.

Dans le mode de prédiction « Intra » dit « H » (pour « Horizontal »), on utilise les valeurs des pixels voisins du bloc courant appartenant à au bloc voisin disposé à gauche ou à droite du bloc courant, lorsque ces pixels voisins ont été précédemment codés, et on recopie la valeur de chaque pixel voisin pour les pixels de la ligne correspondante dans le bloc prédictif.

Dans le mode de prédiction « Intra » dit « VL » (pour « Vertical-Left »), on utilise les valeurs des pixels voisins du bloc courant appartenant au bloc voisin disposé immédiatement au-dessus et au-dessus à droite du bloc courant, lorsque ces pixels voisins ont été précédemment codés, et on recopie la valeur de chaque pixel voisin pour les pixels de la colonne correspondante dans le bloc prédictif.

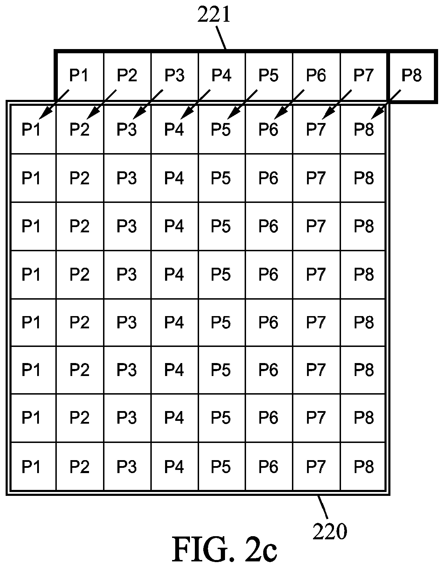

Par exemple, si l'on considère un bloc 220 de 8x8 pixels tel que celui illustré sur la figure 2c, on utilise par exemple l'ensemble de 8 pixels voisins 221 des deux blocs voisins disposés respectivement immédiatement au-dessus et au-dessus sur la droite du bloc courant, dans le cas où le parcours de codage des blocs est tel que ces blocs voisins, ou au moins les pixels voisins considérés, ont déjà été codés. On recopie la valeur de chacun des 8 pixels voisins dans la colonne correspondante du bloc prédictif 220 selon une direction de projection diagonale gauche comme illustré sur la figure 2c.

Le standard de codage vidéo H.264/AVC prévoit 9 modes de prédiction Intra (dont les modes de prédiction DC, H, V, VL décrits ci-dessus). Le standard de codage vidéo HEVC prévoit quant à lui un nombre plus important de 35 modes de prédiction Intra pour les échantillons de luminance, et 5 modes pour les échantillons de chrominance.

Ces standards de codage vidéo prévoient par ailleurs des cas particuliers pour effectuer une prédiction intra. Par exemple, le standard H.264/AVC autorise le découpage de blocs de 16x16 pixels en blocs plus petits, dont la taille peut aller jusqu'à 4x4 pixels, afin d'augmenter la granularité du traitement de codage prédictif.

Comme indiqué ci-dessus, l'information du mode de prédiction Intra est prédite afin de réduire son coût de codage. En effet, la transmission dans le flux encodé d'un index identifiant le mode de prédiction Intra présente un coût d'autant plus élevé que le nombre des modes de prédiction utilisables est important. Même dans le cas du codage H.264/AVC, la transmission d'un index entre 1 et 9 identifiant le mode de prédiction Intra utilisé pour chaque bloc parmi les 9 modes possibles s'avère être chère en termes de coût de codage.

On calcule ainsi un mode le plus probable, noté MPM (en anglais « Most Probable Mode »), qui est utilisé pour coder sur un minimum de bits le mode de prédiction Intra le plus probable. Le MPM est le résultat de la prédiction du mode de prédiction Intra utilisé pour coder le bloc courant.

Lorsque le mode Intra est sélectionné pour l'encodage du bloc courant, on pourra transmettre au décodeur typiquement le résiduel de pixels et le MPM.

Le codage prédictif de type à prédiction par corrélation temporelle référencé pour certains codeurs vidéo sous l'appellation « Inter » inclut une prédiction des pixels d'un bloc (ou ensemble) de pixels en cours de traitement à l'aide de pixels issus d'une ou de plusieurs images précédemment codées (pixels qui ne sont donc pas issus de l'image courante, au contraire du mode de prédiction Intra).

Le mode de prédiction Inter utilise typiquement un ou deux ensembles de pixels respectivement situés dans une ou deux images précédemment codées afin de prédire les pixels du bloc courant. Cela dit, on peut envisager pour un mode de prédiction Inter l'utilisation de plus de deux ensembles de pixels situés respectivement dans des images précédemment codées distinctes deux-à-deux et dont le nombre est supérieur à deux. Cette technique, appelée compensation de mouvement, fait intervenir la détermination d'un ou de deux vecteurs, dits vecteurs de mouvement, qui indiquent respectivement la position de l'ensemble ou des ensembles de pixels à utiliser pour la prédiction dans l'image ou les images précédemment codées (parfois appelées « images de référence »). En référence à la figure 1, les vecteurs utilisés pour le mode « Inter » sont à choisir par l'encodeur 100 par le biais de l'unité d'estimation de mouvement 110 et de l'unité de prédiction des modes Inter/Merge/Skip 104. La mise en oeuvre de l'estimation de mouvement au sein de l'encodeur 100 pourra donc prévoir, selon les cas, la détermination d'un seul vecteur d'estimation de mouvement ou bien de deux vecteurs d'estimation de mouvement qui pointent vers des images potentiellement différentes.

Le ou les vecteurs d'estimation de mouvement générés en sortie de l'unité d'estimation de mouvement 110 seront fournis à l'unité de prédiction des modes Inter/Merge/Skip 104 pour la génération de vecteurs de prédiction Inter. Chaque vecteur de prédiction Inter pourra en effet être généré à partir d'un vecteur d'estimation de mouvement correspondant.

On décrit ci-après plus en détails l'estimation de mouvement pour un bloc courant selon des modes de réalisation.

L'estimation de mouvement peut consister à étudier le déplacement des blocs entre deux images en exploitant la corrélation temporelle entre les pixels. Pour un bloc donné dans l'image courante (le « bloc courant » ou « bloc d'origine »), l'estimation de mouvement permet de sélectionner un bloc le plus ressemblant (dénommé « bloc de référence ») dans une image précédemment codée, dite « image de référence », en représentant le mouvement de ce bloc par exemple avec un vecteur à deux dimensions (et donc deux composantes représentant par exemple respectivement un déplacement horizontal et un déplacement vertical).

Le procédé d'estimation de mouvement est non normatif et est donc susceptible de différer d'un encodeur à un autre.

Par exemple, le procédé d'estimation de mouvement pourra comprendre la recherche dans une zone plus ou moins étendue de l'image de référence, par exemple définie à partir du bloc de l'image de référence correspondant au bloc d'origine dans l'image d'origine, afin de tester la ressemblance du bloc d'origine avec un nombre plus ou moins grand de blocs candidats de l'image de référence.

La corrélation entre un bloc et son déplacement selon un vecteur d'estimation de mouvement peut être calculée à l'aide de la Somme des Différences Absolues (SAD) :

$$\text{SAD} = \sum_x \sum_y |p_{xy} - p'_{xy}| \qquad (1)$$

où $p_{xy}$ est le pixel à la position $(x,y)$ du bloc d'origine et $p'_{xy}$ le pixel à la position $(x, y)$ du bloc de référence. Une SAD faible sera interprétée comme une indication que les deux blocs sont très ressemblants.

Le vecteur issu de l'estimation de mouvement, correspondant au bloc de l'image de référence le plus proche du bloc d'origine parmi les blocs candidats testés dans l'image de référence, pourra servir de base à la détermination d'un vecteur de prédiction Inter. En effet, selon les implémentations, le procédé de prédiction Inter pourra inclure des optimisations visant à sélectionner un vecteur distinct du vecteur issu de l'estimation de mouvement, afin d'avoir une prédiction la moins coûteuse possible pour le mode qui est testé.

Cette optimisation peut par exemple comprendre le test d'un ou de plusieurs vecteurs autour du vecteur issu de l'estimation de mouvement susceptibles de donner un meilleur résultat en fonction de l'objectif poursuivi. Dès lors, le vecteur utilisé pour la prédiction Inter eu égard à une image de référence donnée ne sera pas nécessairement identique au vecteur issu de l'estimation de mouvement pour cette image de référence.

Lorsque le mode Inter est sélectionné pour l'encodage du bloc courant, on pourra transmettre au décodeur typiquement le résiduel de pixels (calculé pour chaque vecteur de prédiction Inter en fonction des pixels du bloc courant et des pixels du bloc vers lequel pointe le vecteur de prédiction Inter considéré) et des informations concernant le ou les vecteurs de prédiction Inter correspondant.

Cependant, le ou les vecteurs de prédiction Inter peuvent représenter un coût important dans les encodeurs vidéo. Certains encodeurs réduisent ce coût de codage en exploitant les vecteurs des blocs voisins du bloc en cours d'encodage. Cette optimisation fait intervenir une prédiction du/des vecteurs de prédiction Inter, à l'instar de la prédiction du mode de prédiction Intra dans le cas d'un codage prédictif du bloc en mode Intra.

Comme indiqué ci-dessus, les informations concernant chaque vecteur de prédiction Inter pourront ainsi être réduites en taille en transmettant, à la place des coordonnées du vecteur par exemple, un indice d'un vecteur prédicteur dans un dictionnaire connu de l'encodeur et du décodeur, et un résiduel quantifiant la distance entre le vecteur de prédiction et le vecteur prédicteur.

Par exemple, dans les codeurs de type H.264/AVC, un vecteur prédicteur médian $mv_{pred}$ est utilisé pour prédire le vecteur à coder $mv$:

$$\varepsilon_{mv} = mv - mv_{pred} \qquad (2)$$

Seul le résiduel $\varepsilon_{mv}$ est transmis dans le flux encodé, de manière à fortement réduire les coûts de codage.

Le principe utilisé dans le standard HEVC est similaire en ce qu'il prévoit la transmission d'un résiduel de vecteur $\varepsilon_{mv}$, qui n'est cependant pas calculé en utilisant un vecteur prédit médian. La norme précise en fait une méthode de calcul d'un ensemble de vecteurs prédits. L'encodeur choisit ensuite un prédicteur parmi ces vecteurs prédits possibles. Il peut donc transmettre, avec le résiduel vecteur, un numéro d'indice du vecteur prédicteur retenu, afin que le décodeur puisse utiliser le même.

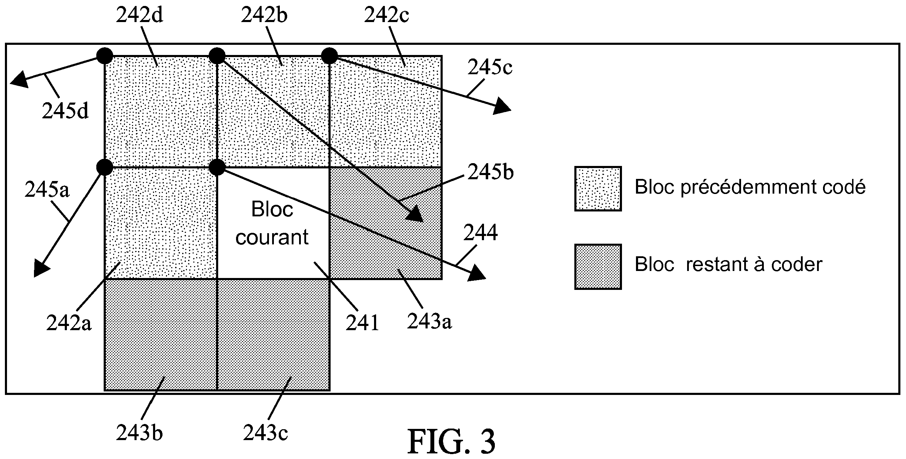

La figure 3 illustre la détermination d'un vecteur prédicteur correspondant dans l'exemple illustré au médian entre les vecteurs de blocs voisins précédemment codés. En référence à la figure 3, le bloc courant (en cours d'encodage) 241 est entouré de quatre blocs voisins 242a, 242b, 242c, 242d précédemment encodés et de trois blocs voisins 243a, 243b, 243c restant à coder.

L'exemple présenté suppose un parcours d'encodage des blocs de l'image tel que, pour chaque bloc en cours d'encodage, les blocs situés à gauche ou au-dessus du bloc courant ont déjà été encodé, de sorte que, sur la figure 3, les blocs voisins 242a, 242b, 242c, 242d précédemment encodés sont situés à gauche 242a ou au-dessus 242b, 242c, 242d du bloc courant 241. Le vecteur prédicteur $mv_{pred}$ 244 du bloc courant 241 correspond au médian entre les vecteurs respectifs 245a, 245b, 245c, 245d des blocs précédemment codés 242a, 242b, 242c ou 242a, 242b, 242d lorsque le bloc 242c n'est par exemple pas disponible (par exemple dans le cas où le bloc 242c est encodé selon un codage prédictif en mode Intra). Un mauvais vecteur prédicteur résultera en un surcoût de codage pour le bloc courant 241. Dans un autre cas particulier où uniquement un ou deux blocs voisins sont codés en mode Inter, les standards H.264/AVC et HEVC prévoient des règles permettant d'utiliser un des vecteurs disponibles dans la mesure où le médian n'est pas calculable.

Certains codeurs utilisent, parfois dans le cadre du mode de prédiction « Inter », un mode référencé dans certains codeurs video sous l'appellation « Skip » dans lequel, comme dans le cas du mode Inter, le bloc courant est prédit à l'aide de pixels issus d'images précédemment codées (une ou deux images, voire plus en fonction de l'implémentation). Le mode Skip est d'ailleurs parfois présenté comme un sous-mode du mode Inter, du fait qu'il correspond à un mode de prédiction « Inter » sans transmission (ou génération dans le flux encodé) de vecteur de prédiction ni de résiduel de pixels.

Le mode Skip trouve à s'appliquer lorsque le résiduel de pixels est suffisamment faible pour qu'il soit considéré inutile de le transmettre dans le flux de sortie du codeur.

D'autre part, dans une optique de réduction maximale du coût de codage, le ou les vecteurs de prédiction utilisés pour ce mode ne seront typiquement pas transmis au décodeur, et seront déduits par le décodeur à partir d'une liste prédéterminée de vecteurs possibles (appelés, de même que pour le mode « Inter », « vecteurs prédicteurs »), ce qui permettra par exemple de transmettre seulement la position du vecteur prédicteur (par exemple un indice de position dans la liste des vecteurs prédicteurs) au lieu de transmettre sa valeur (comme par exemple ses coordonnées). Ainsi, par exemple, dans ce mode de codage, on sélectionne directement un vecteur prédicteur dans une liste prédéterminée connue du décodeur, la sélection du vecteur prédicteur s'effectuant à partir de blocs voisins du bloc courant qui ont été précédemment codés. Comme indiqué ci-dessus, dans les cas où les modes Skip et Inter mis en oeuvre dans le codeur utilisent l'un et l'autre une liste de vecteurs prédicteurs, les listes respectives de vecteurs prédicteurs, que ce soit de par leurs tailles ou de par leurs contenus respectifs, ne seront pas nécessairement identiques.

Le standard HEVC prévoit un autre mode de codage prédictif, dit « Merge », similaire au mode Skip décrit ci-dessus à la différence près que l'on pourra transmettre un résiduel de pixels. Le mode Merge peut ainsi lui aussi correspondre à un mode de prédiction Inter, sans transmission (ou génération dans le flux encodé) de vecteur de prédiction, mais dans lequel un résiduel de pixel et généré et transmis dans le flux encodé.

Le redimensionnement (appelé aussi ré-échantillonnage) est une technique qui permet, à partir d'un flux vidéo composé d'images de taille W x H pixels, de modifier la taille des images du flux à redimensionner selon un facteur d'échelle pour générer une séquence d'images de taille réduite correspondant au flux vidéo initial. La taille de chaque image du flux vidéo est ainsi modifiée (par exemple réduite) selon un facteur d'échelle pour créer les images de la séquence vidéo redimensionnée.

Par exemple, on peut utiliser une technique de redimensionnement pour passer d'un flux vidéo 4K (autrement dit 4HD, avec des images de taille 3840 x 2160 pixels), à un flux vidéo 1 HD (autrement dit HD, avec des images de taille 1920 x 1080 pixels).

Le redimensionnement est une technique qui peut être utilisée en traitement vidéo pour accélérer les temps de traitement et améliorer les performances des algorithmes. Elle est par exemple utilisée dans l'estimation de mouvement hiérarchique, où plusieurs redimensionnements successifs des images sources peuvent être effectués. Des estimations de mouvement itératives sont alors réalisées dans chaque sous-résolution en exploitant les résultats (vecteurs de mouvement) de la résolution inférieure à chaque étape. Il en résulte un champ de mouvement fidèle au mouvement réel et déterminé rapidement par rapport aux autres algorithmes d'estimation de mouvement existants. Ce principe se retrouve aussi dans les schémas d'encodage vidéos dits scalables tels que SVC dans le cas d'utilisation de scalabilité en résolution. Ainsi, des solutions de décision rapide exploitant les décisions entre les différentes couches ont été étudiées dans le cadre de SVC. On se reportera pour une description détaillée de ces solutions à l'article de H. Li et al., intitulé « Fast Mode Decision for Spatial Scalable Video Coding », dans IEEE International Symposium on Circuits and Systems, Island of Kos, Greece, May 2006.

Concernant les schémas d'encodage dits classiques, l'application d'une telle technique aux choix de codages (partitionnement, modes de prédiction, choix de transformée,...) demeure cependant délicate avec les standards précédents le standard HEVC (en particulier MPEG-2 et H.264/AVC). En effet, la structure de codage utilisant un macro-block de taille figée 16x16 pixels ne permet pas d'appliquer aisément une décision d'une sous-résolution vers la séquence de résolution originale.

Les inventeurs des présentes ont découvert que cela est par contre rendu envisageable avec HEVC et sa structure de codage en quadtree combinée à la sélection dynamique de taille principale de bloc.

Le procédé proposé exploite cette possibilité pour accélérer fortement le processus d'encodage en appliquant directement une décision prise sur une vidéo redimensionnée à la vidéo originale, par transposition de paramètres d'encodage générés à partir de la vidéo redimensionnée.

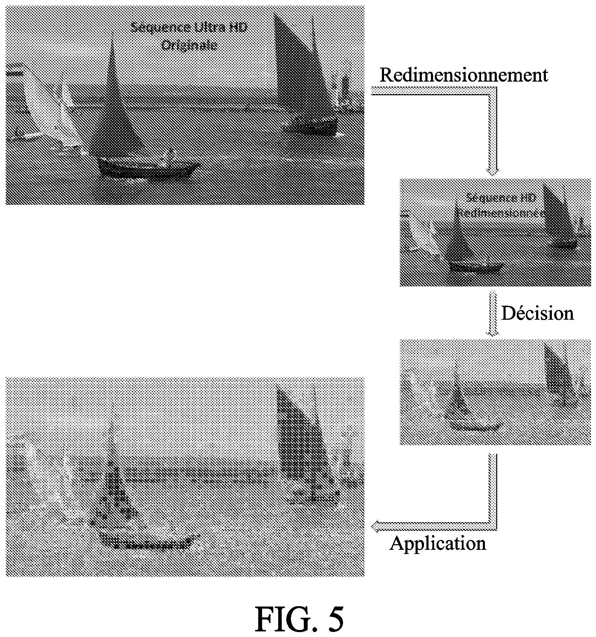

En référence à la figure 5, la méthode proposée comprend la réalisation d'un redimensionnement de la séquence originale d'un facteur prédéterminé (par exemple égal à deux, pour passer d'une vidéo Ultra HD à une vidéo HD). On réalise ensuite les choix de codage sur la séquence redimensionnée avant de les appliquer à la séquence de taille originale.

Dans un ou plusieurs modes de réalisation, ces deux dernières étapes peuvent être réalisées au niveau coding unit afin de préserver une cohésion entre les choix réalisés et de s'insérer aisément dans l'architecture de l'encodeur existant, dans le but de maximiser les performances. Concrètement, chaque coding unit est ainsi décidée dans sa version redimensionnée puis cette décision est immédiatement convertie pour la coding unit de taille originale. Cette conversion nécessite notamment de transposer les tailles de blocs et de transformée ainsi que de passer les vecteurs de mouvements à la bonne échelle. Les étapes restantes sur l'image originale peuvent dans un ou plusieurs modes de réalisation comprendre la reconstruction, l'écriture selon un protocole de codage tel que le protocole de codage CABAC (de l'anglais « Context-based Adaptive Binary Arithmetic Coding ») et/ou d'éventuels traitements par filtrage. On économise ainsi de nombreux traitements propres à la décision (prédiction Intra et Inter, choix de transformée, raffinement des vecteurs...) qui sont réalisés dans la version redimensionnée et ne le sont pas sur la version originale (non redimensionnée). Les performances de compression sont conservées du fait de la cohérence entre les images aux deux résolutions. Par rapport à une décision classique, une erreur moyenne de moins de 8% a ainsi été observée parmi les choix principaux. Ce taux est encore plus faible sur les images de type bidirectionnelles.

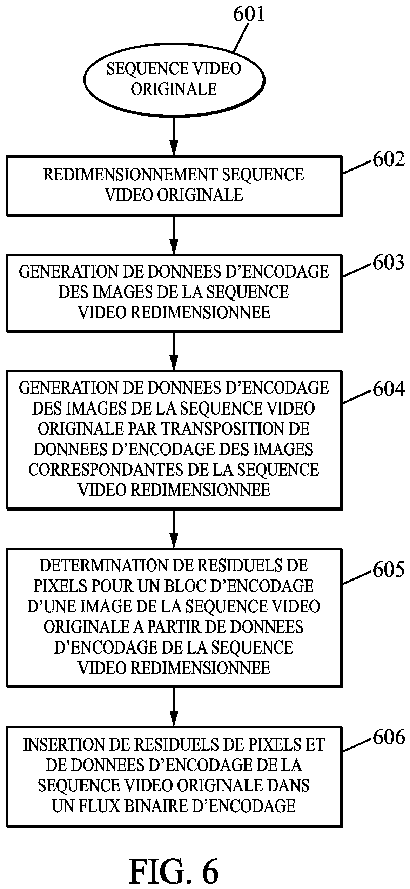

La figure 6 est un diagramme illustrant le procédé proposé selon un mode de réalisation.

On envisage le cas d'une séquence vidéo (601), dite séquence vidéo originale, comprenant un premier ensemble d'images.

La taille des images de ce premier ensemble d'images est réduite (602) selon un facteur d'échelle pour générer un deuxième ensemble d'images. Dans un ou plusieurs mode de réalisation, cette réduction de taille peut être réalisée en utilisant des techniques de redimensionnement de séquence vidéo connues en soi, qui comprendront un filtrage et un sous-échantillonnage de la séquence vidéo originale. La technique de redimensionnement peut par exemple utiliser un re-échantillonnage selon l'algorithme dit de Lanczos, un ré-échantillonnage de type bilinéaire, ou toute autre technique de ré-échantillonnage connue en soi,

Pour chaque image du premier ensemble d'images, des données d'encodage sont générées (603) à partir de l'image correspondante dans le deuxième ensemble d'images. Des données d'encodage sont ainsi générées à partir des images de la séquence vidéo redimensionnée. Ces données d'encodage peuvent contenir des données de partitionnement définissant un partitionnement de l'image encodée de la séquence vidéo redimensionnée en blocs d'encodage ainsi que des données de codage prédictif des blocs d'encodage issus du partitionnement.

Des données d'encodage des images de la vidéo originale sont générées (604) par transposition de données d'encodage des images correspondantes de la séquence vidéo originale. Des données de partitionnement des images de la séquence vidéo originale et des données de codage prédictif des blocs d'encodage issus des données de partitionnement pourront notamment être générées par transposition d'échelle respective, en fonction du facteur d'échelle, de données correspondantes générées à partir de la séquence vidéo redimensionnée.

Une fois le partitionnement des images de la séquence vidéo originale déterminé, et donc les blocs d'encodage de chaque image de la séquence vidéo originale identifiés, on détermine (605), pour au moins un bloc d'encodage, des résiduels de pixels représentatifs d'une distance entre, d'une part, les pixels du bloc d'encodage, et d'autre part, les pixels d'un bloc de prédiction du bloc d'encodage, ce bloc de prédiction étant préalablement déterminé à partir des données d'encodage prédictif obtenues pour le bloc d'encodage par transposition d'échelle des données d'encodage prédictif correspondantes dans la séquence vidéo redimensionnée. Comme expliqué ci-dessus, dans un ou plusieurs modes de réalisation, des résiduels de pixels ne seront pas nécessairement calculés pour tous les blocs d'encodage, et ne le seront notamment pas pour les blocs d'encodage pour lesquels le mode Skip est appliqué.

Dans un ou plusieurs modes de réalisation, les résiduels de pixels ainsi générés peuvent être transformés en appliquant une transformation par blocs (non représentée sur la figure 6), par exemple de type transformée en cosinus discrète par blocs (en anglais « Discrète Cosine Transform », ou « DCT »). Les données produites par cette transformation peuvent en outre être quantifiées, avant d'être insérées dans le flux d'encodage.

Lorsque l'encodage d'un bloc de la séquence vidéo redimensionnée fait intervenir une transformation par blocs de résiduels de pixels déterminés pour le bloc, cette transformation par blocs peut aussi être appliquée à des résiduels de pixels déterminés pour le bloc correspondant dans la séquence vidéo originale. Dans un ou plusieurs modes de réalisation, certains au moins des paramètres de la transformation par blocs appliquée aux résiduels de pixels déterminés au plan original (c'est-à-dire pour le bloc correspondant dans la séquence vidéo originale) pourront être déterminés par une transposition d'échelle, en fonction du facteur d'échelle utilisé pour l'opération de redimensionnement, de paramètres de la transformation par blocs appliquée aux résiduels de pixels déterminés au plan hiérarchique (c'est-à-dire pour le bloc courant dans la séquence vidéo redimensionnée).

Les résiduels de pixels, éventuellement transformés et/ou quantifiés, sont insérés (606), avec les données d'encodage des images de la vidéo originale dans un flux binaire d'encodage de la séquence vidéo originale.

Le procédé proposé permet donc de générer des données d'encodage de la séquence vidéo originale par transposition directe de données d'encodage de la séquence vidéo redimensionnée. Le procédé proposé accélère fortement l'encodage de la séquence vidéo originale du fait qu'il ne met pas systématiquement en oeuvre l'ensemble des algorithmes d'encodage sur la vidéo originale, quand bien même il existe des techniques d'accélération de ces algorithmes avec l'aide des résultats générés à partir de la séquence vidéo redimensionnée, mais qu'il transpose directement certaines données d'encodage générées pour la séquence vidéo redimensionnée pour obtenir des données d'encodage pour la séquence vidéo originale.

Certaines données d'encodage de la séquence vidéo originale, dont des données de partitionnement en blocs d'encodage et des données de codage prédictif des blocs d'encodage, sont obtenues par transposition d'échelle respective, en fonction du facteur d'échelle utilisé pour la génération de la séquence vidéo redimensionnée. Lorsque le codage prédictif d'un bloc d'encodage d'une image de la séquence vidéo originale prévoit la génération et la transmission de résiduels de pixels, ces résiduels de pixels sont déterminés à partir des pixels du bloc d'encodage et des pixels d'un bloc de prédiction du bloc d'encodage, ce bloc de prédiction étant déterminé à partir des données de codage prédictifs pour le bloc d'encodage (obtenues par transposition d'échelle de données d'encodage générées pour la séquence vidéo redimensionnée).

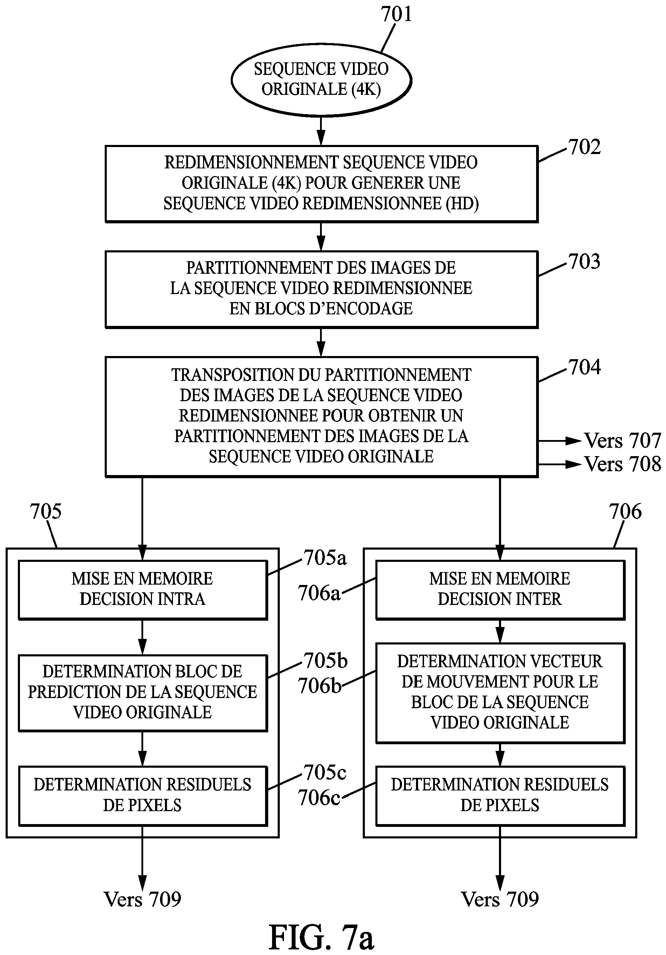

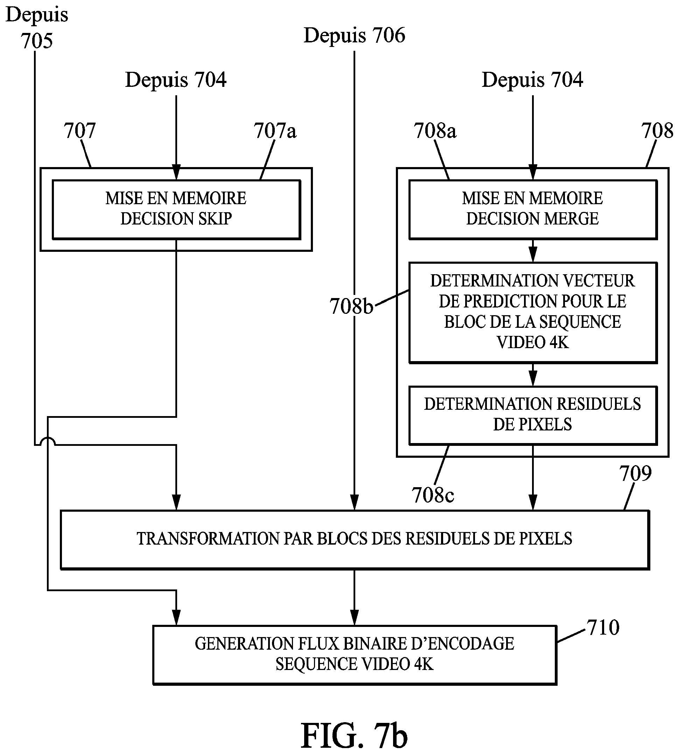

Les figures 7a et 7b illustrent la transposition de données de codage prédictif générées sur une séquence vidéo originale pour obtenir des données de codage prédictif sur une séquence originale (701), par exemple de format 4K, redimensionnée en une séquence vidéo 1HD. Bien entendu, cet exemple de transposition n'est pas limitatif et n'est en particulier pas limité au cas d'une séquence 4K redimensionnée en une séquence vidéo 1HD.

La séquence vidéo originale 4K est redimensionnée pour générer (702) une séquence vidéo au format HD.

Cette séquence vidéo originale est ensuite parcourue pour déterminer (703), pour chaque image de la séquence, un partitionnement en blocs d'encodage. Dans le cas particulier d'un encodage de type HEVC, le partitionnement d'une image de la séquence sera effectué selon une séquence d'itération afin de produire un partitionnement par niveaux représentable par une arborescence comme décrit ci-dessus.

Un bloc d'encodage défini pour une image de la séquence vidéo originale par l'opération de partitionnement peut être transposé sur l'image correspondante de la séquence vidéo originale en multipliant les dimensions de ce bloc par un facteur d'échelle, égal à deux dans le cas d'une transposition du format 1HD vers le format 4K. Ainsi, à un bloc d'encodage de taille 32 x 32, 16 x 16 ou 8 x 8 déterminé par le partitionnement d'une image de la séquence vidéo HD, correspondra un bloc d'encodage de taille 64 x 64, 32 x 32 et 16 x 16, respectivement définissant le partitionnement de l'image correspondante dans la séquence vidéo 4K.

Dans le cas d'un encodage de type HEVC, l'arborescence obtenue par le partitionnement en quadtree de chaque image de la séquence vidéo originale pourra être conservée pour définir le partitionnement des images respectivement correspondantes de la séquence vidéo redimensionnée, sous réserve de transposer la taille de chaque élément de l'arborescence en la multipliant par un facteur d'échelle correspondant au facteur d'échelle de redimensionnement.

Le procédé proposé ne prévoit donc pas d'exécuter à nouveau l'algorithme de partitionnement choisi sur la séquence vidéo originale, après avoir exécuté celui-ci sur la séquence vidéo redimensionnée, mais de transposer (704) les résultats de l'algorithme de partitionnement exécuté sur la séquence vidéo redimensionnée pour définir un partitionnement de la séquence vidéo originale.

Les blocs d'encodage définis par le partitionnement de la séquence vidéo originale pourront être encodés selon un ou plusieurs modes de codage prédictif, par exemple de type à prédiction par corrélation temporelle utilisant une pluralité d'images de la séquence vidéo originale, ou de type à prédiction par corrélation spatiale. Dans un ou plusieurs modes de réalisation, le codage prédictif d'un bloc d'encodage comprendra une décision de codage, selon un ou plusieurs modes de codage prédictifs, tels que, par exemple, des modes de codage Intra, Inter, Skip et/ou Merge tels que précédemment décrits.

Dans un ou plusieurs modes de réalisation, la décision de codage prédictif d'un bloc d'encodage d'une image de la séquence vidéo originale pourra être reprise pour le bloc d'encodage correspondant déterminé par transposition pour la séquence vidéo redimensionnée. En fonction de l'implémentation, la décision pour un bloc d'encodage d'une image de la séquence vidéo redimensionnée pourra par exemple être mise en mémoire afin d'être appliquée pour l'encodage d'un bloc d'encodage correspondant dans une image de la séquence vidéo originale.

Ce principe de réutilisation d'une décision de codage prédictif prise pour un bloc d'encodage de la séquence vidéo redimensionnée pour un bloc d'encodage de la séquence vidéo originale pourra être appliqué à tous les mode de codage prédictif disponibles avec l'encodeur utilisé pour l'encodage de la séquence vidéo redimensionnée, comme par exemple les modes Intra, Inter, Merge et/ou Skip décrits ci-dessus.

Dans un ou plusieurs modes de réalisation, lorsque la décision de codage prédictif d'un bloc d'encodage d'une image de la séquence vidéo originale détermine (705) un codage de type à prédiction par corrélation spatiale, comme par exemple le codage de type Intra décrit ci-dessus, cette décision est reprise (705a) pour le bloc d'encodage correspondant déterminé par transposition pour la séquence vidéo redimensionnée. En fonction de l'implémentation, la décision de codage de type Intra pour le bloc d'encodage de la séquence vidéo redimensionnée pourra être mise en mémoire pour être utilisée pour le bloc d'encodage correspondant de la séquence vidéo originale. Le bloc de prédiction du bloc d'encodage dans l'image de la séquence vidéo redimensionnée est déterminé (705b) par transposition d'échelle du bloc de prédiction dans l'image correspondante de la séquence vidéo originale déterminé pour le bloc d'encodage de cette image correspondante.

Un résiduel de pixels pour le codage Intra du bloc d'encodage de la séquence vidéo redimensionnée pourra être calculé (705c) en déterminant une distance, par exemple selon les procédés décrits ci-dessus, entre les pixels du bloc d'encodage (de la séquence vidéo redimensionnée) et les pixels du bloc de prédiction dans l'image de la séquence vidéo redimensionnée.

Ainsi, dans le cas d'une décision de type Intra prise pour un bloc d'encodage de la séquence vidéo originale, le procédé proposé n'exécute pas à nouveau l'algorithme d'encodage pour le bloc d'encodage correspondant dans la séquence vidéo redimensionnée. Le procédé proposé reprend la décision de type Intra pour le bloc d'encodage de la séquence vidéo redimensionnée, et détermine les blocs de l'image de la séquence vidéo redimensionnée correspondants au bloc d'encodage de la séquence vidéo originale, d'une part, et au bloc de prédiction du bloc d'encodage de la séquence vidéo originale, d'autre part, par transposition d'échelle respectivement appliquée à chacun de ces blocs.

Dans un ou plusieurs modes de réalisation, lorsque la décision de codage prédictif d'un bloc d'encodage d'une image de la séquence vidéo originale détermine (706) un codage de type à prédiction par corrélation temporelle utilisant une pluralité d'images de la séquence vidéo originale, comme par exemple le codage de type Inter décrit ci-dessus, cette décision est reprise (706a) pour le bloc d'encodage correspondant déterminé par transposition pour la séquence vidéo redimensionnée. En fonction de l'implémentation, la décision de codage de type Inter pour le bloc d'encodage de la séquence vidéo redimensionnée pourra être mise en mémoire pour être utilisée pour le bloc d'encodage correspondant de la séquence vidéo originale. Le vecteur de mouvement du bloc d'encodage dans l'image de la séquence vidéo originale n'est pas déterminé par l'unité d'estimation de mouvement (110) (de la Figure 1) en exécutant à nouveau l'algorithme d'estimation de mouvement sur le bloc de la séquence vidéo originale, mais est déterminé (706b) par transposition d'échelle du vecteur de mouvement du bloc d'encodage dans l'image correspondante de la séquence vidéo redimensionnée (qui aura quant à lui été déterminé par l'unité d'estimation de mouvement (110) (de la Figure 1) lors de l'encodage de la séquence vidéo redimensionnée), par exemple en multipliant les composantes de ce vecteur par un facteur d'échelle, qui peut être égal à deux dans le cas d'une transposition du format HD vers le format 4K. Cette multiplication correspond à une homothétie de rapport correspondant au facteur d'échelle et de centre l'origine du vecteur de mouvement.

Un résiduel de pixels pour le codage Inter du bloc d'encodage de la séquence vidéo redimensionnée pourra être calculé (705c) pour chaque vecteur de prédiction Inter déterminé à partir d'un vecteur de mouvement transposé pour être applicable à la séquence vidéo originale en fonction des pixels du bloc d'encodage courant de la séquence vidéo originale et des pixels du bloc vers lequel pointe le vecteur de prédiction Inter considéré. Le bloc vers lequel pointe le vecteur de prédiction Inter considéré est alors utilisé comme bloc de prédiction du bloc d'encodage déterminé à partir des données de codage prédictif que sont la prise de décision de codage de type Inter et l'obtention du vecteur de prédiction par transposition d'échelle du vecteur de mouvement déterminé pour la séquence vidéo redimensionnée.

En fonction de l'implémentation de la prédiction Inter au sein de l'encodeur, on pourra en outre déterminer un indice d'un vecteur prédicteur dans un dictionnaire connu de l'encodeur et du décodeur, et un résiduel quantifiant la distance entre le vecteur de prédiction et le vecteur prédicteur.

Dans un ou plusieurs modes de réalisation, lorsque la décision de codage prédictif d'un bloc d'encodage d'une image de la séquence vidéo originale détermine (707) un codage de type à prédiction par corrélation temporelle utilisant une pluralité d'images de la séquence vidéo originale conduit à appliquer au bloc d'encodage un mode de type Skip décrit ci-dessus, cette décision est reprise (707a) pour le bloc d'encodage correspondant déterminé par transposition pour la séquence vidéo redimensionnée. En fonction de l'implémentation, la décision de codage de type Skip pour le bloc d'encodage de la séquence vidéo redimensionnée pourra être mise en mémoire pour être utilisée pour le bloc d'encodage correspondant de la séquence vidéo originale. La détermination de résiduels de pixels ou de résiduels de vecteur n'étant pas prévue pour le mode Skip dans un ou plusieurs modes de réalisation, il n'est pas nécessaire de déterminer dans ce cas des résiduels de pixels ou des résiduels de vecteur, que ce soit au plan original (séquence vidéo originale) ou au plan hiérarchique (séquence vidéo redimensionnée).

Dans un ou plusieurs modes de réalisation, lorsque la décision de codage prédictif d'un bloc d'encodage d'une image de la séquence vidéo originale détermine (708) un codage de type à prédiction par corrélation temporelle utilisant une pluralité d'images de la séquence vidéo originale conduit à appliquer au bloc d'encodage un mode de type Skip décrit ci-dessus, cette décision est reprise (708a) pour le bloc d'encodage correspondant déterminé par transposition pour la séquence vidéo redimensionnée. En fonction de l'implémentation, la décision de codage de type Merge pour le bloc d'encodage de la séquence vidéo redimensionnée pourra être mise en mémoire pour être utilisée pour le bloc d'encodage correspondant de la séquence vidéo originale. Le vecteur de prédiction du bloc d'encodage dans l'image de la séquence vidéo redimensionnée est déterminé (708b) par transposition d'échelle du vecteur de prédiction du bloc d'encodage dans l'image correspondante de la séquence vidéo originale, par exemple en multipliant les coordonnées de ce vecteur de prédiction par un facteur d'échelle, qui peut être égal à deux dans le cas d'une transposition du format HD vers le format 4K.

Un résiduel de pixels pour le codage Inter du bloc d'encodage de la séquence vidéo redimensionnée pourra être calculé (708c) pour chaque vecteur de prédiction Merge transposé pour être applicable à la séquence vidéo originale en fonction des pixels du bloc d'encodage courant de la séquence vidéo originale et des pixels du bloc vers lequel pointe le vecteur de prédiction Merge considéré. Le bloc vers lequel pointe le vecteur de prédiction Merge considéré est alors utilisé comme bloc de prédiction du bloc d'encodage déterminé à partir des données de codage prédictif que sont la prise de décision de codage de type Merge et l'obtention du vecteur de prédiction par transposition d'échelle du vecteur de prédiction déterminé pour la séquence vidéo redimensionnée.

La détermination de résiduels de vecteur n'étant pas prévue pour le mode Merge dans un ou plusieurs modes de réalisation, il n'est pas nécessaire de déterminer dans ce cas des résiduels de vecteur, que ce soit au plan original (séquence vidéo originale) ou au plan hiérarchique (séquence vidéo redimensionnée).

Les résiduels de pixels correspondant à une distance entre les pixels d'un bloc d'encodage courant (par exemple une « Prédiction Unit » dans le cas d'un codage de type HEVC) et les pixels d'un bloc de prédiction, ils peuvent être considérés comme formant un bloc de taille identique à celle du bloc d'encodage courant. Comme indiqué ci-dessus, on pourra appliquer (709), dans un ou plusieurs modes de réalisation, une transformation par blocs aux résiduels de pixels éventuellement générés, en fonction de la décision prise pour le mode de codage prédictif du bloc courant de la séquence vidéo redimensionnée. Dans l'exemple de mode de réalisation illustré sur les figures 7a et 7b, les modes de codage de type Intra, Inter et Merge donnant lieu à des calculs de résiduels de pixels effectués au plan original, c'est-à-dire sur les images de la séquence vidéo originale, on applique (709) dans chaque cas de figure aux résiduels de pixels calculés une transformation par blocs, par exemple de type DCT. Le mode de codage de type Skip ne donnant pas lieu au calcul de résiduels de pixels, la transformation par blocs n'est typiquement pas appliquée aux données générées dans le cas d'une décision de type Skip.

Dans un ou plusieurs modes de réalisation, dans le cas où l'algorithme d'encodage de la séquence vidéo redimensionnée applique une transformation par blocs aux résiduels de pixels déterminés pour un bloc d'encodage en sélectionnant au préalable des paramètres de transformation par blocs pour ce bloc d'encodage, cette transformation par blocs est aussi appliquée aux résiduels de pixels déterminés au plan original, c'est-à-dire pour le bloc correspondant dans la séquence vidéo originale, avec des paramètres de transformation par blocs dont certains sont déterminés au préalable par transformation d'échelle de paramètres de transformation par blocs utilisés pour le bloc de la séquence vidéo redimensionnée.

Par exemple, la taille des blocs choisie pour la transformation par blocs par l'algorithme d'encodage de la séquence vidéo redimensionnée pourra être multipliée par un facteur d'échelle correspondant à celui utilisé pour l'opération de redimensionnement.

Dans le cas particulier d'un redimensionnement pour passer d'un format 4K à un format HD, ce facteur d'échelle pourra être égal à quatre, chacune des dimensions, par exemple verticale et horizontale, d'un bloc de transformation (en anglais « Transform Unit », ou « TU ») étant multipliée par deux.

Si l'on considère par exemple un algorithme de codage de type HEVC sélectionnant une transformation par blocs de type DCT pour des résiduels de pixels déterminés pour un bloc d'encodage d'une séquence vidéo redimensionnée au format HD avec des blocs de transformation de taille 8 x 8, l'algorithme d'encodage de la séquence vidéo au format 4K correspondant à la séquence vidéo redimensionnée au format HD n'effectuera pas de sélection de taille de blocs de transformation pour la transformation par blocs de type DCT des résiduels de pixels déterminés pour le bloc d'encodage de la séquence vidéo 4K correspondant au bloc d'encodage de la séquence vidéo HD, mais effectuera une transposition de la taille des blocs de transformation utilisée pour le bloc d'encodage de la séquence vidéo HD en multipliant par deux les dimensions des blocs de transformation, pour utiliser des blocs de transformation de taille 16 x 16.

La transformation par blocs pourra être suivie d'une quantification, permettant par exemple de forcer à la valeur zéro les valeurs faibles parmi les valeurs résultats de la transformation par blocs.

Un flux binaire d'encodage de la séquence vidéo originale peut ensuite être généré (710), notamment à partir des données de partitionnement, des données de codage prédictif comprenant les décisions prises pour les blocs d'encodage des images de la séquence vidéo originale définis par les données de partitionnement, et les résiduels, éventuellement transformés par blocs et/ou quantifiés dans les cas des résiduels de pixels.

La détermination de données d'encodage des images de la séquence vidéo originale par transposition de données d'encodage générées à partir d'une version redimensionnée de la séquence vidéo originale pourra être améliorée, dans un ou plusieurs modes de réalisation, dans le cas où l'on recherche un encodage selon un standard, comme par exemple le standard HEVC.

En effet, certains des paramètres d'encodage définis par le standard considéré ne pourront être utilisés pour la séquence vidéo originale du fait de la transposition de données d'encodage générées à partir non pas de la séquence vidéo originale, mais d'une version redimensionnée de celle-ci.

Par exemple, la transposition de données d'encodage HEVC à une échelle supérieure pourra induire des limitations dans la profondeur du quadtree, d'une part, et dans la précision sous-pixellique des vecteurs de mouvement d'autre part.

Dans un ou plusieurs modes de réalisation, il est prévu d'encoder une séquence vidéo originale selon un premier ensemble de paramètres d'encodage. Ce premier ensemble de paramètres d'encodage peut par exemple correspondre aux paramètres d'encodage définis par un standard, comme le standard HEVC.

Concernant l'opération de partitionnement des images, le premier ensemble de paramètres d'encodage peut comprendre un premier ensemble de paramètres de partitionnement pour effectuer, à l'instar du standard HEVC, un partitionnement de la séquence vidéo à encoder avec des blocs de taille pouvant varier de 64 x 64 pixels pour le bloc le plus grand, à 8 x 8 pixels pour le bloc le plus petit (blocs donc chacune des dimensions horizontale et verticale peut être de 8, 16, 32, ou 64 pixels). Dans un tel cas, la décision de partitionnement devra être limitée aux tailles de blocs 32x32 pour les plus grands, à 8x8 pour les plus petits, pour la séquence redimensionnée, afin que ces blocs soient convertis, par transposition de leurs tailles respectives, par exemple avec un facteur d'échelle égal à n, n étant un entier strictement supérieur à 1, en blocs de tailles 64 x 64 pour les plus grands, à 16x16 pour les plus petits, pour la séquence originale, dans le cas où n est égal à deux. Sans traitement supplémentaire, les blocs de taille 8x8 ne sont par conséquent pas disponibles pour la résolution originale. Il est certes possible dans ce cas de terminer la décision sur la résolution originale lorsqu'un bloc 16 x 16 a été décidé et ainsi permettre l'utilisation de blocs 8 x 8 si besoin. Cette solution a néanmoins des défauts, car elle suppose de ne pas appliquer directement la décision de partitionnement prise sur la séquence vidéo redimensionnée et d'exécuter à nouveau l'algorithme de partitionnement sur la séquence vidéo originale pour permettre l'utilisation de blocs 8 x 8, ce qui implique un impact négatif sur la vitesse avec des traitements supplémentaires à faire sur la séquence vidéo originale ainsi que sur la qualité de codage du fait de la perte de cohérence entre les décisions sur la séquence vidéo redimensionnée et la séquence vidéo originale.

Afin d'améliorer le procédé proposé dans ce cas de figure, dans un ou plusieurs modes de réalisation, on définit des tailles de blocs d'encodage pour le partitionnement de la séquence vidéo redimensionnée qui permettent d'atteindre par transposition selon un facteur d'échelle l'ensemble des tailles de blocs d'encodage prévues par le premier ensemble de paramètres d'encodage.

Dans l'exemple précité, correspondant au standard HEVC, on définit une taille supplémentaire de blocs d'encodage, afin d'obtenir des blocs d'encodage de taille 8 x 8 pixels après transposition d'échelle. Dans le cas d'un redimensionnement selon un facteur d'échelle égal à 2, on définit ainsi une taille de blocs égale à 4 x 4 pixels, qui produiront par transposition des blocs de taille 8 x 8 pixels.

De même, on définit la plus grande taille de bloc de partitionnement pour le partitionnement de la séquence vidéo redimensionnée de manière à correspondre à la plus grande taille de bloc de partitionnement prévue pour l'encodage de la séquence vidéo originale (dans le cas du standard de HEVC, des blocs de taille 64 x 64) par transposition au facteur d'échelle considéré pour le redimensionnement. Par exemple, lorsque ce facteur d'échelle est égal à deux, et que l'on souhaite un encodage de la séquence vidéo originale selon le standard HEVC, on se limitera pour l'encodage de la séquence vidéo redimensionnée à un partitionnement utilisant des blocs de plus grande taille égale à 32 x 32.

On définit ainsi un deuxième ensemble de paramètres d'encodage, utilisé pour l'encodage (et notamment le partitionnement) de la séquence vidéo redimensionnée, qui contient un paramètre de taille de bloc d'encodage (ou, dans le cas du standard HEVC, d'unité de codage), ne se trouvant pas dans le premier ensemble de paramètres d'encodage, mais correspondant par transposition d'échelle à un paramètre d'encodage se trouvant dans le premier ensemble.

Dans un ou plusieurs modes de réalisation, le premier ensemble de paramètres d'encodage pourra donc comprendre un premier ensemble de paramètres de partitionnement, et le deuxième ensemble de paramètres d'encodage comprendre un deuxième ensemble de paramètres de partitionnement, ce deuxième ensemble de paramètres de partitionnement étant défini de manière à correspondre à l'antécédent mathématique du premier ensemble de paramètres de partitionnement par la transposition d'échelle.

Dans le cas où l'on souhaite encoder une séquence vidéo selon un standard, comme par exemple le standard HEVC, en utilisant le procédé proposé, cela conduira dans un ou plusieurs modes de réalisation à modifier l'ensemble de paramètres d'encodage selon le standard considéré pour effectuer l'encodage de la séquence vidéo une fois redimensionnée. L'obtention d'un codage normatif, c'est-à-dire conforme à un standard, pour la séquence vidéo originale supposera ainsi l'utilisation d'un codage non normatif pour la séquence vidéo redimensionnée.

En fonction de l'implémentation de l'encodage vidéo, les vecteurs de mouvement peuvent être déterminés avec une précision fractionnaire du pixel, en ce qu'un vecteur de mouvement peut pointer vers un élément de pixel fractionnaire généré entre deux pixels voisins. Dans ce cas, des échantillons fractionnaires seront générés entre deux échantillons voisins, par exemple par interpolation entre ces deux échantillons. C'est le cas du standard HEVC, qui prévoit la génération d'échantillons de luminance fractionnaires en définissant un filtre interpolateur à 8 coefficients pour les positions des demi-échantillons (ou demi-pixels) et un filtre interpolateur à 7 coefficients pour les positions des quarts d'échantillon (ou quarts de pixel). Le standard HEVC permet ainsi la génération de vecteurs de mouvement avec une précision égale au quart de la distance entre deux échantillons de luminance.

L'utilisation d'une précision au quart de pixel pour les vecteurs de mouvement générés pour la version redimensionnée de la séquence vidéo à encoder conduit cependant à une précision de vecteurs de mouvement déterminés pour la version originale supérieure au quart de pixel du fait de l'opération de transposition par homothétie des vecteurs de mouvement générés pour la version redimensionnée. Par exemple, dans le cas d'un redimensionnement 4K vers HD, les vecteurs de mouvement déterminés pour la séquence vidéo redimensionnée qui sont transposés pour être utilisés pour la séquence vidéo originale voient leurs composantes (par ex. horizontale et verticale) multipliée par un facteur d'échelle égal à deux, de sorte qu'ils ont une précision au demi-pixel et non plus au quart de pixel. Cette limitation, qui a un impact visuel non-négligeable, pourrait être contournée en réalisant un raffinement du vecteur de mouvement sur la résolution d'origine. Les tests réalisés ont cependant montré qu'il en résulterait une augmentation trop coûteuse du temps d'encodage par rapport au gain de qualité apporté, le raffinement du vecteur de mouvement sur la résolution originale impliquant une détermination préalable au raffinement de ce vecteur de mouvement sur la résolution originale.

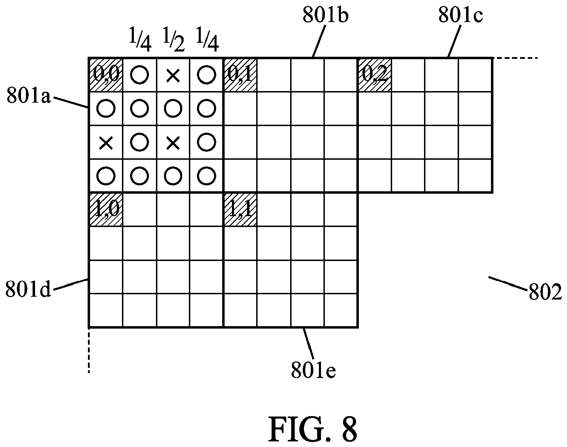

La figure 8 illustre cette limitation relative à la précision fractionnaire du pixel.

La figure 8 montre cinq pixels (0,0), (0,1), (0,2), (1,0) et (1,1) (801a, 801b, 801c, 801d, 801e) d'une matrice de pixels (802), par exemple de taille 3840 x 2160 pixels dans le cas d'un format 4K. L'algorithme d'encodage vidéo utilisé peut prévoir la génération, pour chaque pixel de la matrice de pixels (802), de demi-pixels et/ou de quart de pixels, dans une ou plusieurs directions (horizontale, verticale, diagonale). Comme expliqué ci-dessus, cela permet notamment la génération de vecteurs de mouvement ayant une précision au demi pixel ou au quart de pixel, selon l'algorithme d'estimation de mouvement utilisé.

Sur la figure 8, pour le pixel (0,0) (801a) les quarts de pixel sont représentés par des cercles, et les demi-pixels sont représentés par des croix.

Lorsque l'algorithme d'estimation de mouvement utilisé pour l'encodage de la séquence vidéo redimensionnée génère des vecteurs de mouvement avec une précision inférieure au pixel, par exemple au quart de pixel, et que ces vecteurs de mouvement sont transformés par une transposition d'échelle afin d'être directement utilisés pour l'encodage de la séquence vidéo originale sans à nouveau effectuer une estimation de mouvement sur cette séquence vidéo originale, les vecteurs de mouvement transposés (par multiplication de leur coordonnées par un facteur correspondant au facteur d'échelle utilisé pour le redimensionnement) auront une précision diminuée.

Par exemple, dans le cas d'un redimensionnement d'une séquence vidéo originale de format 4K vers un format HD, et d'un estimateur de mouvement utilisé pour l'encodage vidéo de la séquence vidéo redimensionnée au format HD générant des vecteurs de mouvement avec une précision au quart de pixel, la transposition des vecteurs de mouvement générés pour l'encodage de la séquence vidéo HD comprendra la multiplication des composantes de ce vecteur par un facteur d'échelle égale à deux. Par conséquent, les vecteurs de mouvement transposés utilisés pour l'encodage de la séquence vidéo de format 4K auront une précision au demi-pixel, et les positions marquées d'un cercle sur la figure 8 ne seront plus atteignables par ces vecteurs de mouvement transposés. La transposition des vecteurs de mouvement induit donc elle aussi une perte de résolution pour l'encodage de la séquence vidéo originale.

Afin d'améliorer le procédé proposé dans ce cas de figure, dans un ou plusieurs modes de réalisation, on définit des positions fractionnaires de résolution supérieure à la résolution maximale prévue pour l'encodage vidéo de la séquence vidéo originale, de manière à atteindre par transposition selon le facteur d'échelle utilisé pour le redimensionnement la résolution maximale prévue pour l'encodage vidéo de la séquence vidéo originale.

Dans l'exemple précité, correspondant au standard HEVC, on définit des positions fractionnaires au huitième de pixel entre deux pixels voisins, ainsi qu'un algorithme d'estimation de mouvement qui permet la génération de vecteurs de mouvement avec une précision au huitième de pixel. Ainsi, un vecteur de mouvement pointant sur une position fractionnaire au huitième de pixel sera transformé par la transposition d'échelle (de facteur d'échelle égal à deux) en un vecteur de mouvement pointant sur une position fractionnaire au quart de pixel, compatible avec la résolution fractionnaire maximale prévue par le standard HEVC.

On considère alors à nouveau un deuxième ensemble de paramètres d'encodage, utilisé pour l'encodage selon un mode de codage de type à prédiction par corrélation temporelle utilisant une pluralité d'images de la séquence vidéo (et notamment la génération des vecteurs de mouvement) de la séquence vidéo redimensionnée, qui contient un paramètre de résolution fractionnaire, ne se trouvant pas dans le premier ensemble de paramètres d'encodage, mais correspondant par transposition d'échelle à un paramètre d'encodage se trouvant dans ce premier ensemble.

Dans un ou plusieurs modes de réalisation, le premier ensemble de paramètres d'encodage pourra comprendre un premier ensemble de paramètres de génération de positions fractionnaires de pixel et de résolution fractionnaire pour la génération des vecteurs de mouvement, et le deuxième ensemble de paramètres d'encodage comprendre un deuxième ensemble de paramètres de génération de positions fractionnaires de pixel et de résolution fractionnaire pour la génération des vecteurs de mouvement, ce deuxième ensemble de paramètres étant défini de manière à ce que la résolution fractionnaire maximale, disponible notamment pour les vecteurs de mouvement, corresponde à l'antécédent mathématique de la résolution fractionnaire maximale du premier ensemble de paramètres par la transposition d'échelle.

Dans le cas où l'on souhaite encoder une séquence vidéo selon un standard, comme par exemple le standard HEVC, en utilisant le procédé proposé, cela conduira dans un ou plusieurs modes de réalisation à modifier l'ensemble de paramètres d'encodage selon le standard considéré pour effectuer l'encodage de la séquence vidéo une fois redimensionnée. L'obtention d'un codage normatif, c'est-à-dire conforme à un standard, pour la séquence vidéo originale supposera ainsi l'utilisation d'un codage non normatif pour la séquence vidéo redimensionnée.

L'utilisation d'un codage vidéo non normatif pour la séquence vidéo redimensionnée pourra conduire, dans un ou plusieurs modes de réalisation, à définir un ou plusieurs filtres d'interpolation supplémentaires pour la génération de positions fractionnaires à une résolution supérieure à la résolution fractionnaire maximale prévue par le codage normatif considéré. Dans le cas du standard HEVC, on pourra par exemple utiliser le filtre d'interpolation de la composante chroma pour générer des positions fractionnaires avec une résolution au huitième de pixel.

D'autres paramètres de codage pourront être impactés par cette limitation induite par l'utilisation d'une technique de redimensionnement pour l'encodage d'une séquence vidéo originale selon un standard.

Par exemple, le standard HEVC n'autorise pas la prédiction bidirectionnelle pour des blocs de taille 8 x 4 ou de taille 4 x 8. Cela entraine dans le cas d'une décision hiérarchique prise sur une séquence vidéo redimensionnée la perte de la prédiction bidirectionnelle en 16 x 8 et 8 x 16 sur le plan original.

La technique de prédiction bidirectionnelle fait typiquement intervenir une moyenne pondérée de deux prédictions de type Inter. L'encodeur choisit un ensemble de paramètres de prédiction pour une « direction » (pour une première image de référence), puis pour une deuxième « direction » (pour une deuxième image de référence, distincte de la première image de référence). L'encodeur détermine ensuite s'il retient une seule des deux directions ou les deux, auquel cas une moyenne des deux prédictions générées est déterminée avant de calculer un résiduel de pixels correspondant, qui sera éventuellement traité par transformation et quantification.

La prédiction bidirectionnelle correspond donc dans son principe à une prédiction de type « Inter » avec deux vecteurs prédits. Il en résulte que les aspects du procédé proposé concernant la prédiction Inter sont applicables à la prédiction bidirectionnelle.

En outre, eu égard à la limitation du standard HEVC exposée ci-dessus, on pourra, dans un ou plusieurs modes de réalisation, définir des tailles de blocs pour la prédiction bidirectionnelle pour l'encodage de la séquence vidéo redimensionnée, de manière à atteindre par transposition d'échelle selon le facteur d'échelle utilisé pour le redimensionnement des tailles de blocs prédéfinies pour la prédiction bidirectionnelle pour l'encodage de la séquence vidéo originale.

On considère alors à nouveau un deuxième ensemble de paramètres d'encodage, utilisé pour l'encodage selon un mode de codage de type à prédiction bidirectionnelle par corrélation temporelle utilisant une pluralité d'images de la séquence vidéo (et notamment la génération des vecteurs de mouvement) de la séquence vidéo redimensionnée, qui contient un paramètre de taille de bloc pour la prédiction bidirectionnelle, ne se trouvant pas dans le premier ensemble de paramètres d'encodage, mais correspondant par transposition d'échelle à un paramètre d'encodage (par exemple un paramètre de taille de bloc pour la prédiction bidirectionnelle ) se trouvant dans ce premier ensemble.

A l'inverse, on pourra être amené, dans un ou plusieurs modes de réalisation, à ne pas utiliser, pour l'encodage de la séquence vidéo redimensionnée, un ou plusieurs paramètres d'encodage dès lors qu'ils ne correspondraient pas par transposition d'échelle à un paramètre d'encodage d'un ensemble de paramètres d'encodage déterminé, par exemple selon un standard, utilisé pour l'encodage de la séquence vidéo originale.

Par exemple, dans un ou plusieurs modes de réalisation, on n'utilisera pas pour l'encodage de la séquence vidéo redimensionnée de paramètres de taille de bloc pour la prédiction bidirectionnelle qui ne correspondraient pas par transposition d'échelle à un paramètre de taille de bloc pour la prédiction bidirectionnelle utilisable pour l'encodage de la séquence vidéo originale, par exemple selon un standard.

La taille de blocs de transformée par blocs est un autre exemple de paramètre pour lequel certaines limitations peuvent intervenir.

En effet, le standard HEVC prévoit l'utilisation d'une transformation par blocs avec des blocs de taille égale au minimum à 4 x 4 pixels. Dans ce cas, si l'encodeur utilisé pour l'encodage de la séquence vidéo redimensionnée se limite à cette taille minimum en effectuant un encodage de type HEVC, les blocs de transformation de taille 4 x 4 ne seront pas disponibles pour la résolution originale, c'est-à-dire qu'ils ne seront pas utilisés pour l'encodage de la séquence vidéo originale.

Afin d'améliorer le procédé proposé dans ce cas de figure, dans un ou plusieurs modes de réalisation, on définit des tailles de blocs de transformée pour l'encodage de la séquence vidéo redimensionnée qui permettent d'atteindre par transposition selon un facteur d'échelle l'ensemble des tailles de transformée prévues par le premier ensemble de paramètres d'encodage.

Dans l'exemple précité, correspondant au standard HEVC, on définit une taille supplémentaire de transformée, afin d'obtenir des blocs de transformée de taille 4 x 4 pixels après transposition d'échelle. Dans le cas d'un redimensionnement selon un facteur d'échelle égal à 2, on définit ainsi une taille de transformée égale à 2 x 2 pixels, qui produira par transposition des blocs de transformée de taille 4 x 4 pixels.

De même, on définit la plus grande taille de transformée pour la transformation par blocs utilisée pour l'encodage de la séquence vidéo redimensionnée de manière à correspondre à la plus grande taille de transformée pour la transformation par blocs utilisée pour l'encodage de la séquence vidéo originale par transposition au facteur d'échelle considéré pour le redimensionnement.

On considère alors à nouveau un deuxième ensemble de paramètres d'encodage, utilisé pour l'encodage (et notamment l'application d'une transformée par blocs) de la séquence vidéo redimensionnée, qui contient un paramètre de taille de transformée, ne se trouvant pas dans le premier ensemble de paramètres d'encodage, mais correspondant par transposition d'échelle à un paramètre d'encodage se trouvant dans le premier ensemble.

Dans un ou plusieurs modes de réalisation, le premier ensemble de paramètres d'encodage pourra comprendre un premier ensemble de paramètres de transformée, et le deuxième ensemble de paramètres d'encodage comprendre un deuxième ensemble de paramètres de transformée, ce deuxième ensemble de paramètres de transformée étant défini de manière à correspondre à l'antécédent mathématique du premier ensemble de paramètres de transformée par la transposition d'échelle.

En considérant à nouveau le cas où l'on souhaite encoder une séquence vidéo selon un standard, comme par exemple le standard HEVC, en utilisant le procédé proposé, cela conduira dans un ou plusieurs modes de réalisation à modifier l'ensemble de paramètres d'encodage selon le standard considéré pour effectuer l'encodage de la séquence vidéo une fois redimensionnée. L'obtention d'un codage normatif, c'est-à-dire conforme à un standard, pour la séquence vidéo originale supposera ainsi l'utilisation d'un codage non normatif pour la séquence vidéo redimensionnée.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé d'encodage proposé et l'équipement pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres. En outre, il se peut que certains systèmes et équipements décrits ci-dessus n'incorporent pas la totalité des modules et fonctions décrits pour les modes de réalisation préférés.

**Revendications**

1. Procédé d'encodage d'un premier ensemble d'images d'une séquence vidéo selon un premier ensemble de paramètres d'encodage, dans lequel le premier ensemble de paramètres d'encodage définit un ensemble de paramètres utilisables pour encoder chaque image du premier ensemble d'images, le procédé comprenant :

réduire la taille des images du premier ensemble d'images en fonction d'un facteur d'échelle pour générer un deuxième ensemble d'images correspondant à la séquence vidéo;

générer, pour chaque image du deuxième ensemble d'images, des deuxièmes données d'encodage selon un deuxième ensemble de paramètres d'encodage, dans lequel le deuxième ensemble de paramètres d'encodage définit un ensemble de paramètres utilisables pour encoder chaque image du deuxième ensemble d'images, et dans lequel les deuxièmes données d'encodage identifient un choix de paramètres d'encodage parmi le deuxième ensemble de paramètres d'encodage ;

déterminer, pour chaque image du premier ensemble d'images, des premières données d'encodage par transposition d'échelle respective, en fonction du facteur d'échelle, des deuxièmes données d'encodage générées pour l'image correspondante dans le deuxième ensemble d'images, dans lequel les premières données d'encodage identifient un choix de paramètres d'encodage parmi le premier ensemble de paramètres d'encodage et comprennent des premières données de partitionnement définissant un partitionnement de l'image en blocs d'encodage et des premières données de codage prédictif des blocs d'encodage issus du partitionnement ;

déterminer, pour au moins un bloc d'encodage d'une image du premier ensemble d'images, des résiduels de pixels respectifs représentatifs d'une distance entre les pixels du bloc d'encodage et les pixels d'un bloc de prédiction du bloc d'encodage déterminé à partir des données de codage prédictif obtenues pour le bloc d'encodage par transposition d'échelle des deuxièmes données d'encodage ;

appliquer, pour le au moins un bloc d'encodage d'une image du premier ensemble d'images, une transformation par blocs aux résiduels de pixels déterminés pour le bloc d'encodage ; et insérer les résiduels de pixels transformés et les premières données d'encodage dans un flux binaire d'encodage du premier ensemble d'images,

dans lequel les deuxièmes données d'encodage comprennent en outre, pour une image courante du deuxième ensemble d'images, des données de transformation par blocs, le procédé comprenant en outre :

- pour chaque bloc d'encodage issu d'un partitionnement de l'image courante du deuxième ensemble d'images, sélectionner, dans un ensemble de paramètres de transformation par blocs, des paramètres de transformation par blocs pour l'application d'une transformée par blocs au résiduel déterminé pour le bloc d'encodage issu du partitionnement de l'image courante du deuxième ensemble d'images, et générer des deuxièmes données de transformation par blocs en fonction du paramètre de transformation sélectionné ;
- déterminer, pour chaque bloc d'encodage de chaque image du premier ensemble d'images, des premières données de transformation par blocs par une transposition d'échelle, en fonction du facteur d'échelle, des deuxièmes données de transformation par blocs ; et
- appliquer aux résiduels de pixels déterminés pour le bloc d'encodage de l'image du premier ensemble d'images la transformation par blocs en fonction des premières données de transformation par blocs.

2. Procédé d'encodage selon la revendication 1, dans lequel le deuxième ensemble de paramètres d'encodage contient au moins un deuxième paramètre ne se trouvant pas dans le premier ensemble de paramètres d'encodage, le premier ensemble de paramètres comprenant au moins un premier paramètre correspondant à une transposition d'échelle en fonction du facteur d'échelle appliquée au deuxième paramètre.

3. Procédé d'encodage selon la revendication 1 ou 2, dans lequel les deuxièmes données d'encodage comprennent, pour une image courante du deuxième ensemble d'images, des deuxièmes données de partitionnement, le procédé comprenant en outre :

- déterminer, selon un ensemble de paramètres de partitionnement inclus dans le deuxième ensemble de paramètres d'encodage, un partitionnement de l'image courante en blocs d'encodage, et générer les deuxièmes données de partitionnement en fonction du partitionnement déterminé ;
- déterminer les premières données de partitionnement par transposition d'échelle des deuxièmes données de partitionnement.

4. Procédé d'encodage selon l'une quelconque des revendications précédentes, dans lequel les deuxièmes données d'encodage comprennent en outre, pour l'image courante, des deuxièmes données de codage prédictif, le procédé comprenant en outre

- pour chaque bloc d'encodage issu d'un partitionnement de l'image courante, déterminer, selon un ensemble de paramètres de codage prédictif, un mode de codage prédictif, et générer les deuxièmes données de codage prédictif en fonction du mode de codage déterminé ;
- déterminer les premières données de codage prédictif par transposition d'échelle des deuxièmes données de codage prédictif.

5. Procédé d'encodage selon la revendication 1, dans lequel le deuxième ensemble de paramètres d'encodage comprend un ensemble de paramètres de partitionnement, un ensemble de paramètres de codage prédictif, un ensemble de paramètres de codage de type à prédiction par corrélation temporelle bidirectionnelle, et un ensemble de paramètres de transformation par blocs, et dans lequel le deuxième ensemble de paramètres d'encodage comprend au moins un deuxième paramètre parmi les paramètres de partitionnement, les paramètres de codage prédictif, les paramètres de codage de type à prédiction par corrélation temporelle bidirectionnelle, et les paramètres de transformation par blocs, ne se trouvant pas dans le premier ensemble de paramètres d'encodage, le premier ensemble de paramètres comprenant au moins un premier paramètre correspondant à une transposition d'échelle en fonction du facteur d'échelle appliquée au deuxième paramètre.

6. Procédé d'encodage selon la revendication 2, dans lequel le deuxième paramètre est un paramètre de partitionnement relatif à la taille minimum des blocs d'encodages utilisable pour définir un partitionnement.

7. Procédé d'encodage selon la revendication 2, dans lequel le deuxième paramètre est un paramètre de codage prédictif selon un mode de codage de type à prédiction par compensation de mouvement en utilisant un vecteur de mouvement pointant sur une image distincte d'une image courante dans le deuxième ensemble d'images avec une précision au huitième de pixel.

8. Procédé d'encodage selon la revendication 2, dans lequel le deuxième paramètre est un paramètre de transformation par blocs relatif à la taille minimum de bloc utilisable pour effectuer la transformation par blocs d'un bloc d'encodage.

9. Procédé d'encodage selon la revendication 2, dans lequel le deuxième paramètre est un paramètre de taille de bloc pour le codage prédictif selon un mode de codage de type à prédiction par compensation de mouvement de type bidirectionnelle en utilisant des premier et deuxième vecteurs de mouvement pointant respectivement sur des première et deuxième images distinctes d'une image courante dans le deuxième ensemble d'images.

10. Procédé d'encodage selon l'une quelconque des revendications précédentes, dans lequel le premier ensemble de paramètres d'encodage correspond à un encodage du premier ensemble d'images selon le standard High Efficiency Video Coding, HEVC.

11. Dispositif d'encodage d'un premier ensemble d'images d'une séquence vidéo selon un premier ensemble de paramètres d'encodage, comprenant :

une interface d'entrée configurée pour recevoir le premier ensemble d'images de la séquence vidéo ;
une unité d'encodage de flux vidéo, couplée de manière opérationnelle à l'interface d'entrée, et configurée pour encoder le premier ensemble d'images selon le premier ensemble de paramètres d'encodage en utilisant le procédé de l'une quelconque des revendications 1 à 10.

12. Programme d'ordinateur, chargeable dans une mémoire associée à un processeur, et comprenant des portions de code pour la mise en oeuvre des étapes d'un procédé selon l'une quelconque des revendications 1 à 10 lors de l'exécution dudit programme par le processeur.

13. Ensemble de données représentant, par exemple par voie de compression ou d'encodage, un programme d'ordinateur selon la revendication 12.

14. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à encoder un premier ensemble d'images d'une séquence vidéo selon un premier ensemble de paramètres d'encodage selon le procédé de l'une quelconque des revendications 1 à 10.

## Patentansprüche

1. Verfahren zum Codieren einer ersten Einheit an Bildern einer Videosequenz gemäß einer ersten Einheit an Codierungsparametern, wobei die erste Einheit an Codierungsparametern eine Einheit an Parametern definiert, die zum Codieren eines jeden Bildes der ersten Einheit an Bildern verwendbar sind, wobei das Verfahren umfasst:

   Reduzieren der Größe der Bilder der ersten Einheit an Bildern in Abhängigkeit von einem Skalierungsfaktor, um eine zweite Einheit an Bildern zu erzeugen, die der Videosequenz entsprechen;
   Erzeugen für jedes Bild der zweiten Einheit an Bildern von zweiten Codierungsdaten gemäß einer zweiten Einheit an Codierungsparametern, wobei die zweite Einheit an Codierungsparametern eine Einheit an Parametern definiert, die zum Codieren eines jeden Bildes der zweiten Einheit an Bildern verwendbar sind, und wobei die zweiten Codierungsdaten eine Wahl von Codierungsparametern aus der zweiten Einheit an Codierungsparametern identifizieren,
   Bestimmen für jedes Bild der ersten Einheit an Bildern von ersten Codierungsdaten durch jeweilige Skalierungstransposition, in Abhängigkeit von dem Skalierungsfaktor, der zweiten Codierungsdaten, die für das entsprechende Bild in der zweiten Einheit an Bildern erzeugt werden, wobei die ersten Codierungsdaten eine Wahl von Codierungsparametern aus der ersten Einheit an Codierungsparametern identifizieren, und erste Partitionierungsdaten, die eine Partitionierung des Bildes in Codierungsblöcke definieren, und erste Daten zur prädiktiven Codierung der aus der Partitionierung stammenden Codierungsblöcke umfassen,
   Bestimmen für mindestens einen Codierungsblock eines Bildes der ersten Einheit an Bildern jeweiliger Pixelreste, die repräsentativ für einen Abstand zwischen den Pixeln des Codierungsblocks und den Pixeln eines Prädiktionsblocks des bestimmten Codierungsblocks aus den Daten zur prädiktiven Codierung sind, die für den Codierungsblock durch Skalierungstransposition der zweiten Codierungsdaten erhalten werden;
   Anwenden für den mindestens einen Codierungsblock eines Bildes der ersten Einheit an Bildern einer Transformation nach Blöcken auf die Pixelreste, die für den Codierungsblock bestimmt werden; und
Einbringen der transformierten Pixelreste und der ersten Codierungsdaten in einen binären Codierungsstrom der ersten Einheit an Bildern, wobei die zweiten Codierungsdaten weiter für ein aktuelles Bild der zweiten Einheit an Bildern Daten zur Transformation nach Blöcken umfassen, wobei das Verfahren weiter umfasst:

   - für jeden Codierungsblock aus einer Partitionierung des aktuellen Bildes der zweiten Einheit an Bildern Auswählen in einer Einheit an Parametern zur Transformation nach Blöcken jener Parameter zur Transformation nach Blöcken zur Anwendung einer Transformation nach Blöcken auf den bestimmten Rest für den Codierungsblock aus der Partitionierung des aktuellen Bildes der zweiten Einheit an Bildern, und Erzeugen der zweiten Daten zur Transformation nach Blöcken in Abhängigkeit von dem ausgewählten Transformationsparameter;
   - Bestimmen für jeden Codierungsblock eines jeden Bildes der ersten Einheit an Bildern der ersten Daten zur Transformation nach Blöcken durch eine Skalierungstransposition in Abhängigkeit von dem Skalierungsfaktor der zweiten Daten zur Transformation nach Blöcken; und
   - Anwenden auf die bestimmten Pixelreste für den Codierungsblock des Bildes der ersten Einheit an Bildern der Transformation nach Blöcken in Abhängigkeit von den ersten Daten zur Transformation nach Blöcken.

2. Verfahren zum Codieren nach Anspruch 1, wobei die zweite Einheit an Codierungsparametern mindestens einen zweiten Parameter enthält, der sich nicht in der ersten Einheit an Codierungsparametern befindet, wobei die erste Einheit an Parametern mindestens einen ersten Parameter umfasst, der einer Skalierungstransposition in Abhängigkeit von dem Skalierungsfaktor umfasst, der auf den zweiten Parameter angewendet wird.

3. Verfahren zum Codieren nach Anspruch 1 oder 2, wobei die zweiten Codierungsdaten für ein aktuelles Bild der zweiten Einheit an Bildern zweite Partitionierungsdaten umfassen, wobei das Verfahren weiter umfasst:

   - Bestimmen, gemäß einer Einheit an Partitionierungsparametern, die in der zweiten Einheit an Codierungsparametern eingeschlossen sind, einer Partitionierung des aktuellen Bildes in Codierungsblöcke, und Erzeugen der zweiten Partitionierungsdaten in Abhängigkeit von der bestimmten Partitionierung;

- Bestimmen der ersten Partitionierungsdaten durch Skalierungstransposition der zweiten Partitionierungsdaten.

4. Verfahren zum Codieren nach einem der vorstehenden Ansprüche, wobei die zweiten Codierungsdaten weiter für das aktuelle Bild zweite Daten zur prädiktiven Codierung umfassen, wobei das Verfahren weiter umfasst

- für jeden Codierungsblock aus einer Partitionierung des aktuellen Bildes Bestimmen gemäß einer Einheit an Parametern zur prädiktiven Codierung eines prädiktiven Codierungsmodus und Erzeugen der zweiten Daten zur prädiktiven Codierung in Abhängigkeit von dem bestimmten Codierungsmodus;
- Bestimmen der ersten Daten zur prädiktiven Codierung durch Skalierungstransposition der zweiten Daten zur prädiktiven Codierung.

5. Verfahren zum Codieren nach Anspruch 1, wobei die zweite Einheit an Codierungsparametern eine Einheit an Codierungsparametern, eine Einheit an Partitionierungsparametern, eine Einheit an Parametern zur prädiktiven Codierung, eine Einheit an Codierungsparametern in der Art mit einer Prädiktion durch bidirektionale zeitliche Korrelation und eine Einheit an Parametern zur Transformation nach Blöcken umfasst, und wobei die zweite Einheit an Codierungsparametern mindestens einen zweiten Parameter aus den Partitionierungsparametern, Parametern zur prädiktiven Codierung, den Codierungsparametern in der Art mit einer Prädiktion durch bidirektionale zeitliche Korrelation und den Parametern zur Transformation nach Blöcken umfasst, die sich nicht in der ersten Einheit an Codierungsparametern befinden, wobei die erste Einheit an Parametern mindestens einen ersten Parameter umfasst, der einer Skalierungstransposition in Abhängigkeit von dem Skalierungsfaktor entspricht, der auf den zweiten Parameter angewendet wird.

6. Verfahren zum Codieren nach Anspruch 2, wobei der zweite Parameter ein Partitionierungsparameter bezüglich der Mindestgröße der Codierungsblöcke ist, der verwendbar ist, um eine Partitionierung zu definieren.

7. Verfahren zum Codieren nach Anspruch 2, wobei der zweite Parameter ein Parameter zur prädiktiven Codierung gemäß einem Codierungsmodus in der Art mit einer Prädiktion durch Bewegungskompensation durch Verwenden eines Bewegungsvektors ist, der auf ein Bild, das sich von einem aktuellen Bild in der zweiten Einheit an Bildern unterscheidet, mit einer Präzision von einem Achtel-Pixel zeigt.

8. Verfahren zum Codieren nach Anspruch 2, wobei der zweite Parameter ein Parameter zur Transformation nach Blöcken bezüglich der Mindestgröße eines Blocks ist, der verwendbar ist, um die Transformation nach Blöcken eines Codierungsblocks durchzuführen.

9. Verfahren zum Codieren nach Anspruch 2, wobei der zweite Parameter ein Parameter in Blockgröße zum prädiktiven Codieren gemäß einem Codierungsmodus in der Art mit Prädiktion durch Bewegungskompensation der bidirektionalen Art durch Verwenden des ersten und zweiten Bewegungsvektors ist, die jeweils auf das erste und zweite Bild, die sich von einem aktuellen Bild in der zweiten Einheit an Bildern unterscheiden, zeigen.

10. Verfahren zum Codieren nach einem der vorstehenden Ansprüche, wobei die erste Einheit an Codierungsparametern einer Codierung der ersten Einheit an Bildern gemäß dem High Efficiency Video Coding-, HEVC-, Standard, entspricht.

11. Vorrichtung zum Codieren einer ersten Einheit an Bildern einer Videosequenz gemäß einer ersten Einheit an Codierungsparametern, umfassend:

eine Eingangsschnittstelle, die konfiguriert ist, um die erste Einheit an Bildern der Videosequenz zu empfangen;
eine Einheit zum Codieren eines Videostroms, die betrieblich mit der Eingangsschnittstelle gekoppelt ist, und konfiguriert ist, um die erste Einheit an Bildern gemäß der ersten Einheit an Codierungsparametern durch Verwenden des Verfahrens nach einem der Ansprüche 1 bis 10 zu codieren.

12. Computerprogramm, das in einen Speicher ladbar ist, der mit einem Prozessor verknüpft ist, und Codeabschnitte zur Umsetzung der Schritte eines Verfahrens nach einem der Ansprüche 1 bis 10 bei der Ausführung des Programmes durch den Prozessor umfasst.

13. Einheit von Daten, die beispielsweise anhand von Kompression oder Codierung ein Computerprogramm nach Anspruch 12 repräsentieren.

14. Nicht flüchtiges Speichermedium eines Programmes, das durch einen Computer ausführbar ist, umfassend eine Einheit von Daten, die ein oder mehrere Programme repräsentieren, die Anweisungen umfassen, um bei Ausführung des einen oder mehrerer Programme durch einen Computer, der eine Verarbeitungseinheit umfasst, die betrieblich mit Speichermitteln und mit einem Eingangs-/Ausgangsschnittstellenmodul gekoppelt ist, den Computer zu lenken, um eine erste Einheit an Bildern einer Videosequenz gemäß einer ersten Einheit an Codierungsparametern gemäß dem Verfahren nach einem der Ansprüche 1 bis 10 zu codieren.

## Claims

1. A method of encoding a first set of images of video sequence according to a first set of encoding parameters, in which the first set of encoding parameters defines a set of parameters usable to encode each image of the first set of images, the method comprising:

   reducing the size of images of the first set of images depending on a scale factor for generating a second set of images corresponding to the video sequence;
   generating, for each image of the second set of images, second encoding data according to a second set of encoding parameters, the second set of encoding parameters defining the set of parameters used to encode each image of the second set of images, and the second encoding data defining encoding information identifying a choice of encoding parameters from the second set of encoding parameters;
   determining, for each image of the first set of images, first encoding data by respective scale transposition, depending on the scale factor, second encoding data generated for the corresponding image in the second set of images, the first encoding data identifying a choice of encoding parameters from the first set of encoding parameters, and comprising first partitioning data defining a partitioning of the image into encoding blocks and first predictive coding data of the encoding blocks derived from the partitioning;
   determining, for at least one encoding block of an image of the first set of images, respective pixel residuals representing a distance between the pixels of the encoding block and the pixels of the prediction block of the encoding block determined from the predictive coding data obtained for the encoding block by scale transposition of the second encoding data;
   applying, for the at least one encoding block of an image of the first set of images, a block transformation to the pixel residuals determined for the encoding block, and
   inserting the transformed pixel residuals and the first encoding data in a binary encoding stream of the first set of images,

   wherein the second encoding data further comprises, for a current image of the second set of images, block transformation data, the method further comprising:

   - for each encoding block derived from a partitioning of the current image of the second set of images, selecting, in a set of block transformation parameters, block transformation parameters for applying a block transform to the residual determined for said encoding block resulting from the partitioning of the current image of the second set of images, and generating second block transformation data depending on the selected transformation parameter;
   - determining, for each encoding block of each image of the first set of images, first block transformation data by scale transposition, depending on the scale factor, of the second block transformation data; and

   applying, on the determined pixel residuals for the encoding block of the image of the first set of images, the block transformation depending on the first block transformation data.

2. The method of encoding according to Claim 1, wherein the second set of encoding parameters contains at least one second parameter which is not in the first set of encoding parameters, the second set of parameters comprising at least one first parameter corresponding to a scale transposition depending on the scale factor applied to the second parameter.

3. The method of encoding according to Claim 1 or 2, wherein the second encoding data comprises, for a current image of the second set of images, second partitioning data, the method further comprising:

   - determining, according to a set of partitioning parameters included in the second set of encoding parameters, a partitioning of the current image into encoding blocks, and generating the second partitioning data depending on the determined partitioning;
   - determining the first partitioning data by scale transposition of the second partitioning data.

4. The method of encoding according to any of the previous claims, wherein the second encoding data further comprises, for the current image, second predictive coding data, the method further comprising

   - for each encoding block derived from the partitioning of the current image, determining, according to a set of predictive coding parameters, a predictive coding mode, and generating the second predictive coding data depending on the determined coding mode;

- determining the first predictive coding data by scale transposition of the second predictive coding data.

5. The method of encoding according to Claim 1, wherein the second set of encoding parameters comprises a set of partitioning parameters, a set of predictive coding parameters, a set of coding parameters for bidirectional prediction by temporal correlation, and a set of block transformation parameters, and wherein the second set of encoding parameters comprises at least one second parameter from the partitioning parameters, the predictive coding parameters, the coding parameters for bidirectional prediction by temporal correlation, and the block transformation parameters, which is not in the first set of encoding parameters, the first set of parameters comprising at least one first parameter corresponding to a scale transposition depending on the scale factor applied to the second parameter.

6. The method of encoding according to Claim 2, wherein the second parameter is a partitioning parameter related to the minimum size of the encoding blocks used for defining a partitioning.

7. The method of encoding according to Claim 2, wherein the second parameter is a predictive coding parameter according to the coding mode for prediction by motion compensation using the motion vector pointing to a separate image of the current image and the second set of images with a precision of an eighth of a pixel.

8. The method of encoding according to Claim 2, wherein the second parameter is the block transformation parameter related to the minimum block size usable for performing the block transformation of an encoding block.

9. The method of encoding according to Claim 2, wherein the second parameter is a block size parameter for the predictive coding according to a coding mode of motion compensation bidirectional predictive type and using the first and second motion vectors pointing to the first and second separate images of a current image in the second set of images respectively.

10. The method of encoding according to any of the previous claims, wherein the first set of encoding parameters corresponds to an encoding of the first set of images according to High Efficient Video Coding, HEVC, standard.

11. A device for encoding a first set of images of a video sequence according to a first encoding parameter set, comprising:

an input interface configured for receiving the first set of images of the video sequence; a video stream encoding unit, operationally coupled to the input interface, and configured for encoding the first set of images according to the first set of encoding parameters using the method according to any of Claims 1 to 10.

12. A computer program, being chargeable in a memory associated with a processor, comprising code portions for implementing the steps of the method according to any of Claims 1 to 10 during execution of said program by the processor.

13. A data set representing, for example via a compression or encoding path, a computer program according to Claim 12.

14. A non-transitory storage medium for a program which is executable by a computer, comprising a data set representing one or more programs, said one or more programs comprising instructions for, during execution of said one or more programs by a computer comprising a processing unit operationally coupled to memory means and to an input/output interface module, leads the computer to encode a first set of images of a video sequence according to a first set of encoding parameters according to the method according to Claims 1 to 10.

FIG. 1

202

201

| | M | M | M | M | M | M | M | M |
|---|---|---|---|---|---|---|---|---|
| | M | M | M | M | M | M | M | M |
| | M | M | M | M | M | M | M | M |
| | M | M | M | M | M | M | M | M |
| | M | M | M | M | M | M | M | M |
| | M | M | M | M | M | M | M | M |
| | M | M | M | M | M | M | M | M |
| | M | M | M | M | M | M | M | M |

200

**FIG. 2a**

211

| P1 | P2 | P3 | P4 | P5 | P6 | P7 | P8 |
|---|---|---|---|---|---|---|---|
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |

210

**FIG. 2b**

EP 3 318 061 B1

221

| P1 | P2 | P3 | P4 | P5 | P6 | P7 | P8 |
|----|----|----|----|----|----|----|----|

| P1 | P2 | P3 | P4 | P5 | P6 | P7 | P8 |
|----|----|----|----|----|----|----|----|
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |
| P1 | P2 | P3 | P4 | P5 | P6 | P7 | P8 |

220

# FIG. 2c

FIG. 3

242d  242b  242c

245c

245d

245a

245b

Bloc courant

244

242a  241  243a

243b  243c

Bloc précédemment codé

Bloc restant à coder

EP 3 318 061 B1

FIG. 4a

FIG. 4b

Redimensionnement

Décision

Application

## FIG. 5

601

SEQUENCE VIDEO
ORIGINALE

↓

REDIMENSIONNEMENT SEQUENCE
VIDEO ORIGINALE
602

↓

GENERATION DE DONNEES D'ENCODAGE
DES IMAGES DE LA SEQUENCE
VIDEO REDIMENSIONNEE
603

↓

GENERATION DE DONNEES D'ENCODAGE
DES IMAGES DE LA SEQUENCE VIDEO
ORIGINALE PAR TRANSPOSITION DE
DONNEES D'ENCODAGE DES IMAGES
CORRESPONDANTES DE LA SEQUENCE
VIDEO REDIMENSIONNEE
604

↓

DETERMINATION DE RESIDUELS DE
PIXELS POUR UN BLOC D'ENCODAGE
D'UNE IMAGE DE LA SEQUENCE VIDEO
ORIGINALE A PARTIR DE DONNEES
D'ENCODAGE DE LA SEQUENCE
VIDEO REDIMENSIONNEE
605

↓

INSERTION DE RESIDUELS DE PIXELS ET
DE DONNEES D'ENCODAGE DE LA
SEQUENCE VIDEO ORIGINALE DANS
UN FLUX BINAIRE D'ENCODAGE
606

# FIG. 6

701

SEQUENCE VIDEO
ORIGINALE (4K)

702

REDIMENSIONNEMENT SEQUENCE VIDEO
ORIGINALE (4K) POUR GENERER UNE
SEQUENCE VIDEO REDIMENSIONNEE (HD)

703

PARTITIONNEMENT DES IMAGES DE
LA SEQUENCE VIDEO REDIMENSIONNEE
EN BLOCS D'ENCODAGE

704

TRANSPOSITION DU PARTITIONNEMENT
DES IMAGES DE LA SEQUENCE VIDEO
REDIMENSIONNEE POUR OBTENIR UN
PARTITIONNEMENT DES IMAGES DE LA
SEQUENCE VIDEO ORIGINALE

→ Vers 707
→ Vers 708

705

706

MISE EN MEMOIRE
DECISION INTRA

705a

706a

MISE EN MEMOIRE
DECISION INTER

DETERMINATION BLOC DE
PREDICTION DE LA SEQUENCE
VIDEO ORIGINALE

705b

706b

DETERMINATION VECTEUR
DE MOUVEMENT POUR LE
BLOC DE LA SEQUENCE
VIDEO ORIGINALE

DETERMINATION RESIDUELS
DE PIXELS

705c

706c

DETERMINATION RESIDUELS
DE PIXELS

Vers 709

Vers 709

FIG. 7a

Depuis
705

Depuis 706

Depuis 704

Depuis 704

707                                 707a

708a                                 708

```
┌─────────────────────────────┐
│  ┌───────────────────────┐  │
│  │  MISE EN MEMOIRE      │  │
│  │  DECISION SKIP        │  │
│  └───────────────────────┘  │
└─────────────────────────────┘
```

```
┌─────────────────────────────────┐
│  ┌───────────────────────────┐  │
│  │  MISE EN MEMOIRE          │  │
│  │  DECISION MERGE           │  │
│  └───────────────────────────┘  │
│  ┌───────────────────────────┐  │
│  │  DETERMINATION VECTEUR    │  │
│  │  DE PREDICTION POUR LE    │  │
│  │  BLOC DE LA SEQUENCE      │  │
│  │  VIDEO 4K                 │  │
│  └───────────────────────────┘  │
│  ┌───────────────────────────┐  │
│  │  DETERMINATION RESIDUELS  │  │
│  │  DE PIXELS                │  │
│  └───────────────────────────┘  │
└─────────────────────────────────┘
```

708b

708c

709

TRANSFORMATION PAR BLOCS DES RESIDUELS DE PIXELS

GENERATION FLUX BINAIRE D'ENCODAGE
SEQUENCE VIDEO 4K                          710

FIG. 7b

FIG. 8

## RÉFÉRENCES CITÉES DANS LA DESCRIPTION

**Littérature non-brevet citée dans la description**

- **GARY J. SULLIVAN et al.** Overview of the High Efficiency Video Coding (HEVC) Standard. *IEEE Transactions on Circuits and Systems for Video Technology,* Décembre 2012, vol. 22 (12
- **DONGDONG ZHU.** *Fast inter prédiction mode décision for H. 264*
- **DE HE LI.** *Fast mode décision for spatial scalable vidéo coding*
- **DE DE WOLF.** *Comparison of prédiction schemes with motion information reuse for low complexity spatial scalability*
- **H. LI et al.** Fast Mode Decision for Spatial Scalable Video Coding. *IEEE International Symposium on Circuits and Systems, Island of Kos, Greece,* Mai 2006